# EUROPEAN PATENT SPECIFICATION

(11) **EP 4 149 836 B1**
(45) Date of publication and mention of the grant of the patent: **25.02.2026**
(21) Application number: 21803433.8
(22) Date of filing: 14.05.2021
(51) Int. Cl.: B64C 39/02, G05D 1/00, G01C 21/00, H04W 64/00, A01B 69/04, A01B 69/00, B64U 80/86, G06V 20/17, G06V 20/58, B64U 101/30

(54) **OBSTACLE MONITORING SYSTEMS AND METHODS FOR SAME**
HINDERNISÜBERWACHUNGSSYSTEME UND VERFAHREN DAFÜR
SYSTÈMES DE SURVEILLANCE D'OBSTACLES ET PROCÉDÉS ASSOCIÉS

(30) Priority: 14.05.2020 US 202063024979 P
(43) Date of publication of application: 22.03.2023
(73) Proprietor: Raven Industries, Inc., Sioux Falls, SD 57117-5107 (US)
(72) Inventor: KOCER, Jared Ernest, Sioux Falls, South Dakota 57110 (US); PREHEIM, John D., Beresford, South Dakota 57004 (US); ROBEY, W. Wade, Sioux Falls, South Dakota 57108 (US)
(74) Representative: Pfenning, Meinig & Partner mbB
(86) International application number: PCT/US2021/032636
(87) International publication number: WO 2021/231984

(56) References cited:
- EP-A1- 3 414 982
- DE-A1- 102014 201 203
- DE-A1- 102016 014 783
- JP-A- 2018 151 845
- US-A1- 2007 193 798
- US-A1- 2012 029 732
- US-A1- 2012 035 788
- US-A1- 2014 303 814
- US-A1- 2016 144 982
- US-A1- 2018 024 549
- US-A1- 2018 321 681
- US-B1- 9 505 494
- US-B2- 10 165 725

## Description

### RELTED APPLICATIONS

This application claims the benefit of priority to U.S. Patent Application Serial No. 63/024.979. filed May 14, 2020.

### COPYRIGHT NOTICE

A portion of the disclosure of this patent document contains material that is subject to copyright protection. The copyright owner has no objection to the facsimile reproduction by anyone of the patent document or the patent disclosure, as it appears in the Patent and Trademark Office patent files or records, but otherwise reserves all copyright rights whatsoever. The following notice applies to the software and data as described below and in the drawings that form a part of this document: Copyright Raven Industries, Inc. of Sioux Falls, South Dakota. All Rights Reserved.

### TECHNICAL FIELD

This document pertains generally, but not by way of limitation, to remote obstacle and hazard detection and identification for agricultural vehicles.

### BACKGROUND

Agricultural vehicles (e.g., one or more of vehicles, implements or both) are operated in environments including crops, uneven terrain, fixed-position or moving obstacles and fixed-position or moving hazards. Vehicle operators learn the locations of known obstacles and hazards (collectively obstacles) through repetitive work in fields and actively navigate around these obstacles based on memory or field maps that are annotated with obstacle locations.

In other examples, technicians conduct drone flights over fields with cameras or video cameras (collectively cameras) to attempt to identify obstacles. Alternatively, various other sensors, including multi-spectral sensors, may be deployed either by satellite or aerial drone to map the topography of a field and to identify regions of concern. The identified obstacles are then manually input into a field map on a field computer to assist with navigation of the agricultural vehicle relative to the obstacles, for instance to interrupt application of an agricultural product or provide guidance around obstacles. Alternatively, obstacles identified in previous agricultural operations (e.g., planting earlier in the season or harvesting from a prior season) are logged to field maps for use in future agricultural operations.

In still other examples, agricultural vehicles are equipped with extensive instrument packages including sensors directed in multiple directions (e.g., forward, backward, to the sides or under the vehicle) to identify obstacles. The agricultural vehicles include signal processing algorithms that attempt to identify obstacles from the signals of the various sensors and provide alerts regarding the identified obstacles.

Optionally, an agricultural vehicle may use a ground based scout drone that drives ahead of the vehicle and provides a forward look at the forthcoming path for the agricultural vehicle. The observation of the ground based scout drone is used at the agricultural vehicle to modulate an agricultural husbandry operation, such as the application of agricultural products (e.g., for a sprayer or spreader).

US 2012/029732 A1 describes sensor for monitoring a plant population in front of a harvester and a transfer process of the crop from the harvester to a transport vehicle arranged on an unmanned aircraft. The aircraft moves in the vicinity of the harvester in the harvesting mode and communicates in a wireless fashion with a control unit that controls an actuator for influencing an operating parameter of the harvester and/or the transport vehicle (in real time based on signals of the sensor in the harvesting mode. EP 3 414 982 A1 describes a method and a device for detecting animals by means of a contactless sensor system, as well as a method for controlling the agricultural field cultivation machine with such an animal detection device, and the combination of field cultivation machine and animal detection device. It is proposed to use a remote-controlled aerial drone equipped with at least one sensor for detecting animals, by means of which the tramlines of an agricultural implement in a field to be worked can be scanned without contact by the sensors attached to the aerial drone before the implement actually drives down the respective tramline. DE 10 2014 201203 A1 describes an agricultural work vehicle which cooperates with an aircraft having a sensor for exploring a field, the signals of which can be transmitted to the agricultural work vehicle. The work vehicle is equipped with a device for transmitting electrical energy to the aircraft. JP 2018 151845 A describes a working ground map data preparation device of an agricultural work vehicle, an unmanned flying object having a radio control function that includes a flying object GPS receiver, a ground photographing camera and a data transmitter to an agricultural work vehicle, wherein the unmanned flying object transmits topographical map information of a farm field obtained by flying high in the sky over the farm field to the agricultural work vehicle via the data transmitter. US 10 165 725 B2 describes an agricultural machine which has a communication component configured to receive a first data set and a second data set. The first and second data sets comprise indications of a soil parameter of a worksite. The first data set is captured at an earlier time than the second data set. The agricultural machine also has a controller configured to receive the first and second data sets and, based on the first and second data sets, generate a map of the worksite. The agricultural machine also has a controllable subsystem configured to receive a control signal from the controller. The control signal is generated based on both a position of the agricultural machine within the worksite and the generated map. The control signal is configured to control operator of the controllable subsystem.

### SUMMARY

The present inventors have recognized, among other things, that a problem to be solved includes detecting and identifying obstacles along a path of an agricultural vehicle and within a localized vehicle zone proximate to the vehicle with a consolidated detection system configured to detect both forthcoming obstacles (along a path) and proximate obstacles relative to the vehicle. For instance, in other systems drone flights, satellite imagery or the like are conducted over a field prior to an agricultural operation. Optionally, obstacles identified in previous agricultural operations (e.g., planting, harvesting in the prior year or the like) are noted by an operator of the corresponding vehicle. Identified obstacles are manually input to a field map, for instance on a field computer associated with an agricultural vehicle. In this example, obstacles are detected and identified outside of a present agricultural operation and input to a system, such as a field computer having a field map. In some examples, each of detection, identification, and indexing obstacles to a field map for use by an operator or automated driving system are laborious.

Additionally, systems relying on field maps including previously logged obstacles fail to detect, identify and index intervening obstacles (e.g.. obstacles and hazards) that have developed in a field in the intervening time between the last update of a field map and the present (to be conducted) agricultural operation. Such obstacles include, but are not limited to, fallen trees, accumulated brush, livestock, people, damaged fences, water, washouts, sink holes, muddy terrain or the like. Extensive updating of a field map is accordingly needed before conducting the agricultural operation, or alternatively an operator (e.g., driver) accompanies the vehicle to navigate the intervening obstacles. In some examples automated driving is not advisable because of the difficulty of consistent updating of the field map with obstacles, especially with a dynamic environment, such as a field, that may have livestock, people or difficult to detect obstacles (e.g., washouts, sink holes, water, mud or the like).

In still other examples, an agricultural vehicle is equipped with instrument packages, controllers and software that attempt to detect and identify obstacles. The instrument packages include sensors, such as cameras (e.g.. video, still or the like), thermographic, spectrographic sensors or the like, mounted to the vehicle and aimed in multiple directions to attempt to detect obstacles in a manner similar to an in person operator. The controllers for these systems include signal processing algorithms that attempt to identify obstacles from the signals of the various sensors and provide alerts regarding the identified obstacles. These systems are technically intensive and expensive. In addition, the signals are provided from sensors that are affixed to the vehicle. The sensors have limited fields of view due to low mounting elevations and intervening crops. Additionally, the limited fields of view are further aggravated by turning, accelerating, shaking or vibrating of the vehicle or the like that frustrate accurate sensor operation. In some examples, multiple sensors are included to provide multi-direction sensing from the agricultural vehicle. Signal processing of a signal to detect and identify an obstacle from a single sensor is a computer intensive process that is further intensified when conducted for signals from multiple sensors directed in multiple directions.

Optionally, another agricultural vehicle may use a ground based scout drone (including a ground drone in combination with an airborne drone) that moves ahead of the vehicle and provides forward observation of the forthcoming path for the agricultural vehicle including identification of crop rows. The forward observation is relayed to the agricultural vehicle and processed to ascertain crop or field conditions to modulate agricultural husbandry and log forthcoming problem areas. The scout drone is used to look ahead of the agricultural vehicle (e.g., along the path or route the vehicle will follow) and facilitate operation of the vehicle along that path. In some examples, the scout drone is not configured to monitor a zone around the vehicle, and detect and identify obstacles (livestock, people including children or the like) that may be under or around the vehicle and at risk of a collision with the vehicle without otherwise being along the forthcoming path of the vehicle.

The present subject matter provides a solution to these problems, for instance with an autonomous obstacle monitoring and vehicle control system according to claim 1 configured to operate a remote sensing device (e.g., a drone, boom, articulating arm or the like) including one or more sensors. The remote sensing device is movable relative to the agricultural vehicle, and configured to observe obstacles proximate to the agricultural vehicle or along a path of the vehicle, for instance based on an assigned mission for the remote sensing device.

The system includes an obstacle recognition module in communication with the remote sensing device. The obstacle recognition module is configured to identify and index obstacles along the path or proximate to the agricultural vehicle. For instance, an observed obstacle (e.g.. corresponding information or signals representing the obstacle from the one or more sensors) is compared with one or more archived obstacles having associated archived characteristics, such as pixel attributes representing one or more shape, brightness, groupings or arrangement of pixels or the like. In another example, the observed article includes associated non-optical information including a heat signature, ultrasound profile, radar or LIDAR profile or the like that is compared with corresponding archived characteristics of the archived obstacles. The obstacle recognition module identifies the obstacle (e.g., optionally labels or appends indications to the obstacle) based on the comparison, such as an obstacle name and associated probability of identification, for instance, 'truck' and '90 percent' probability. In other examples, the obstacle recognition module indexes the identified obstacle with its location (e.g., relative to the agricultural vehicle or other frame of reference) or vector (e.g., including a location, speed, acceleration, direction of movement including component vectors or the like). The obstacle recognition module, in one example, monitors the identified obstacles with continued observation through the remote sensing device, and updating of identification and indexing.

The system further includes a vehicle operation module that autonomously controls the agricultural vehicle based on the identified and indexed obstacles. For instance, the vehicle operation module includes one or more of autonomous steering, throttle and braking control. The system described herein modulates the autonomous control according to the identified and indexed obstacles. For example, the vehicle operation module receives one or more of locations, vectors, identity or the like of identified obstacles and refines or updates planned paths (to avoid obstacles or revise paths for enhanced efficiency, to meet another vehicle at a specified location or the like), varies vehicle navigation along planned paths (to avoid obstacles), varies planned agricultural operations or the like (e.g., spraying with one or more nozzles, the application of product, boom height, implement height or the like).

In still other examples, the obstacle recognition module assigns a priority to the identified obstacle to modify operation of the remainder of the system including a vehicle operation module that autonomously controls the agricultural vehicle. For example, categories of identified obstacles include a halt operation, modified operation or normal operation indication. Identified obstacles within the halt operation indication category interrupt operation of the agricultural vehicle, for instance the vehicle operation module prevents or arrests driving operation. One example of a halt operation indication includes identified humans or animals within a threshold range of the vehicle or having an intercepting vector with the vehicle. Another example of a halt operation indication includes a diagnostic obstacle, such as a seized wheel or faulty critical component of the vehicle. For safety or operation reasons the vehicle operation module observes the halt operation indication and arrests operation of the agricultural vehicle.

In another example, identified obstacles having the normal operation indication are monitored, however the vehicle operation module continues a planned (normal) operation without modification or halting. For instance, the identified obstacle is outside of a path (e.g., swath, guidance line or the like) of the vehicle, has a vector indicating no interception or a minimal likelihood of interception with the vehicle, is a diagnostic obstacle but has minimal impact on operation of the vehicle or the like.

In still another example, the identified obstacles have a modified operation indication and include identified obstacles such as animals or humans that are outside of a threshold range from the vehicle or have a vector directed away from the vehicle. Optionally, an identified obstacle having a modified operation indication include static obstacles that permit avoidance (e.g., fallen tree, damaged fence, unharvested crop, saturated or muddy soil, sink holes, washed out field zones or the like) or diagnostic obstacles including one or more plugged sprayer nozzles, a fault row section of a planter or the like. With the modified operation indication the vehicle operation module continues operation with one or more variations based on the identified obstacle including autonomously navigating around the obstacle, compensating for a diagnostic obstacle (logging the incomplete product application or planting operation, increasing droplet size to offset spray drift, increasing flow rate in an adjacent nozzle or the like).

The autonomous obstacle monitoring and vehicle control system facilitates the assignment of one or more missions to the remote sensing device for observation of both field and diagnostic obstacles in a global manner, in contrast to discrete systems that conduct husbandry evaluations or are statically mounted around a vehicle. Instead, the systems described herein use a remote sensing device to observe a variety of obstacles, identify and index those obstacles, and then cooperatively communicate the identified obstacles to enhance autonomous control of the agricultural vehicle including, but not limited to, driving operation of the agricultural vehicle.

This overview is intended to provide an overview of subject matter of the present patent application. It is not intended to provide an exclusive or exhaustive explanation of the invention. The detailed description is included to provide further information about the present patent application.

### BRIEF DESCRIPTION OF THE DRAWINGS

In the drawings, which are not necessarily drawn to scale, like numerals may describe similar components in different views. Like numerals having different letter suffixes may represent different instances of similar components. The drawings illustrate generally, by way of example, but not by way of limitation, various embodiments discussed in the present document.
- Figure 1: is a top view of an agricultural system including an agricultural vehicle and one example of an autonomous obstacle monitoring and vehicle control system.
- Figure 2A: is a top view of the agricultural system of Figure 1 including a remote sensing device conducting an inspection mission.
- Figure 2B: is a top view of the agricultural system of Figure 1 including another example of a remote sensing device conducting an inspection mission.
- Figure 3A: is a schematic view of an autonomous obstacle monitoring and vehicle control system.
- Figure 3B: is a schematic view of an autonomous obstacle monitoring and vehicle control system.
- Figure 4: is a perspective view of a drone system including a drone as one example of a remote sensing device.
- Figure 5: is a schematic view of an agricultural system including agricultural vehicles and a remote sensing device conducting a scouting mission.
- Figure 6: is a schematic view of an agricultural system including agricultural vehicles and a remote sensing device conducting a plurality of scouting missions.
- Figure 7: is a detailed schematic view of an agricultural system of Figure 6 including agricultural vehicles and the remote sensing device conducting scouting and inspection missions.
- Figure 8: is a perspective view of an agricultural system including an agricultural vehicle and a remote sensing device conducting a diagnostic mission.
- Figure 9: is a perspective view of an agricultural system including an agricultural vehicle and a remote sensing device conducting another example of a diagnostic mission.
- Figure 10: is a perspective view of an agricultural system including an agricultural vehicle and a remote sensing device conducting a supplemental example of a diagnostic mission.
- Figure 11: is a schematic view of an agricultural system including an agricultural vehicle and a remote sensing device conducting a scouting mission for assessing one or more of crop or weed characteristics.
- Figure 12: is a schematic view of an agricultural system including an agricultural vehicle and a remote sensing device conducting a scouting mission for assessing one or more weeds, pests or the like.
- Figure 13: is a schematic view of an agricultural system including an agricultural vehicle and a remote sensing device conducting a scouting mission for assessing soil.
- Figure 14: is a block diagram of one example of a method for autonomous obstacle monitoring and vehicle control.

### DETAILED DESCRIPTION

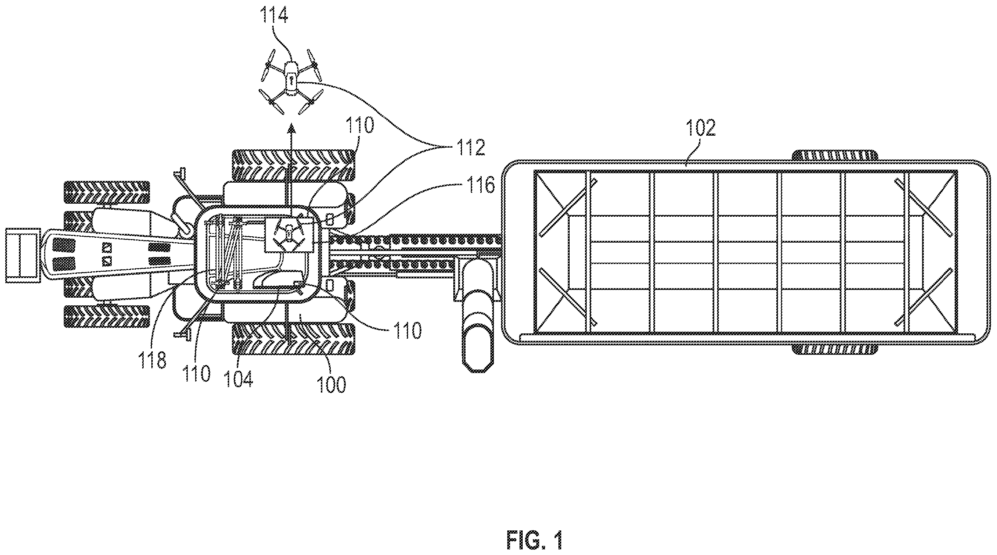

Figure 1 is a top view of one example of an agricultural system 100, such as an agricultural vehicle and an associated implement 102 (or implements). The agricultural vehicle includes, but is not limited to, a tractor, combine/harvester, sprayer, truck or the like. The associated implement 102 includes, but is not limited to, a grain cart, sprayer, spreader, seeder, planter, tiller, mower, harvester head, baler or the like. As shown in Figure 1, the agricultural system 100 in this example is a tractor coupled with a grain cart as the agricultural implement 102. As described herein, an autonomous obstacle monitoring and vehicle control system 110 is associated with the agricultural system 100.

One example of an autonomous obstacle monitoring and vehicle control system 110 (referred to herein as the system 110) is shown in Figure 1. In this example, the system 110 includes a remote sensing system 112 configured to observe the area proximate to the agricultural system 100, proximate to a determined path (e.g., along, adjacent to, within a scanning range of onboard instruments for a planned path, automated route or the like) and observe obstacles for identification and indexing as described herein. As shown in Figure 1, the system 110 in this example includes one or more remote sensing devices 114, 118.

One example device 114 includes a drone (aerial or ground) having one or more sensors configured to observe an area proximate to the drone and obstacles therein. The drone including the associated sensors is guided along a determined path, proximate to the vehicle or the like and observes potential obstacles proximate to one or more of the path or the vehicle. Optionally, the remote sensing system 112 includes a docking station 116 configured to store, deploy and retrieve the drone. The docking station 116 facilitates recharging of the drone, downloading or uploading of information to and from the drone including observations by the sensors associated with the drone or the like. Additionally, the docking station 116 facilitates deployment and retrieval of the drone through anchors, fiducials or the like described herein. In another example, the drone includes a wireless transceiver and is configured to supply information (e.g., observations by sensors, kinematics for the drone, such as location, velocity, acceleration or the like) without docking of the drone to the docking station 116.

Another example of a remote sensing device 118 is shown in Figure 1 including a boom, articulating arm or the like coupled with the agricultural system 100 and movable relative to the system. In a similar manner to the remote sensing device 114 (e.g., a drone or other separable vehicle from the agricultural system 100) the remote sensing device 118 includes one or more sensors configured to observe the area proximate to the device 118 including obstacles therein. As shown here, the remote sensing device 118 is movable relative to the agricultural system 100 while coupled with the system. For instance, the device 118 is an articulating, movable, boom or arm that is moved around the vehicle, directed in one or more directions or the like to observe the area (e.g., proximate to the vehicle, proximate to a determined path or the like) and facilitate the identification of obstacles. In other examples, the remote sensing device 118 is moved around the system 100 and its sensors are directed outwardly, for instance along a determined path, toward the perimeter area surrounding the system or the like to observe obstacles more distant from the system 100 but still proximate to the system 100.

The autonomous obstacle monitoring and vehicle control system 110 further includes a controller, such as an autonomous agricultural system controller 104 shown in Figure 1. The controller 104 interconnects the agricultural system 100, such as the vehicle, implement or the like, with the remainder of the autonomous obstacle monitoring and vehicle control system 110. The controller 104 includes one or more modules (e.g., circuits, processors or the line configured to conduct functions according to instructions) that facilitate automated operation of the agricultural system including, but not limited to, driving, implement operation or the like. For instance, the controller 104 includes a path module configured to determine a path of travel for the agricultural vehicle including ongoing planning of paths for the vehicle to drive, reception of planned paths (e.g., from the cloud, companion vehicle, server, operator, remote operator or the like).

The controller 104 includes a mission administration module configured to operate the remote sensing devices 114, 118. For instance, the mission administration module includes a database of mission types, associated mission routes, known or archived obstacles associated with the mission type or the like. The mission administration module in an example provides the remote sensing devices 114, 118 with instructions for conducting the various missions including one or more of, but not limited to, mission routes the devices will move along, mission time, locations for observation (e.g., proximate to a path, proximate to the agricultural system, proximate to another vehicle or implement or the like), obstacle characteristics, such as a archived obstacle characteristics to facilitate identification of observed obstacles or the like. Optionally, the mission administration module of the controller 104 actively controls the remote sensing devices during conduct of a mission. In another example, the controller 104 hands off control after providing instructions to the remote sensing devices (including control systems associated with the remote sensing devices).

The autonomous agricultural system controller 104 further includes a vehicle operation module that interconnects the controller with the operable features of the agricultural system 100 including, but not limited to, steering controls, throttle and brakes, transmission, agricultural implement controls or the like. The vehicle operation module is configured to control the agricultural system (e.g., vehicle, implement, combination of both or the like) based on the determined path and one or more obstacles, such as obstacles identified and indexed with the autonomous obstacle monitoring and vehicle control system 110 described herein.

As further discussed herein, the system 110 includes an obstacle recognition module in communication with the remote sensing device 114 (or 118). In one example, the obstacle recognition module is a component (circuit, processor configured to carry out instructions or the like) of the autonomous agricultural system control 104. In another example, the obstacle recognition module is provided with a different component of the agricultural system 100, a different vehicle (e.g., a companion vehicle), a server, a mobile device, with the remote sensing device 114 (or 118) or in a cloud based computing environment. The obstacle recognition module interprets observations conducted with the remote sensing device 114 and identifies obstacles from the observations. As discussed herein, in one example characteristics (e.g., of observed obstacles) detected with the remote sensing devices 114, 118 and their associated one or more sensors are compared with characteristics of archived obstacles. The obstacle recognition module identifies observed obstacles based on the comparison. The identified obstacles are indexed to enhance control of the agricultural system. For example, locations of the identified obstacles are indexed to field maps, relative to the agricultural system, relative to a coordinate system or the like. In another example, a vector of the obstacle (e.g., its direction of travel and magnitude such as speed, acceleration or the like) is indexed. The vehicle operation module controls the agricultural system based on the determined path (e.g., from the path module) and the identified and indexed obstacles. As discussed herein, vehicle operation with respect to the path and obstacles includes conducting one or more of normal operation (operation is not modified or is modified in a manner that does not affect the specified goal or result of an agricultural operation), modified operation (navigating around or relative to the obstacles) or halted operation (e.g., for high priority obstacles, like humans, or obstacles that are unnavigable by the system 110).

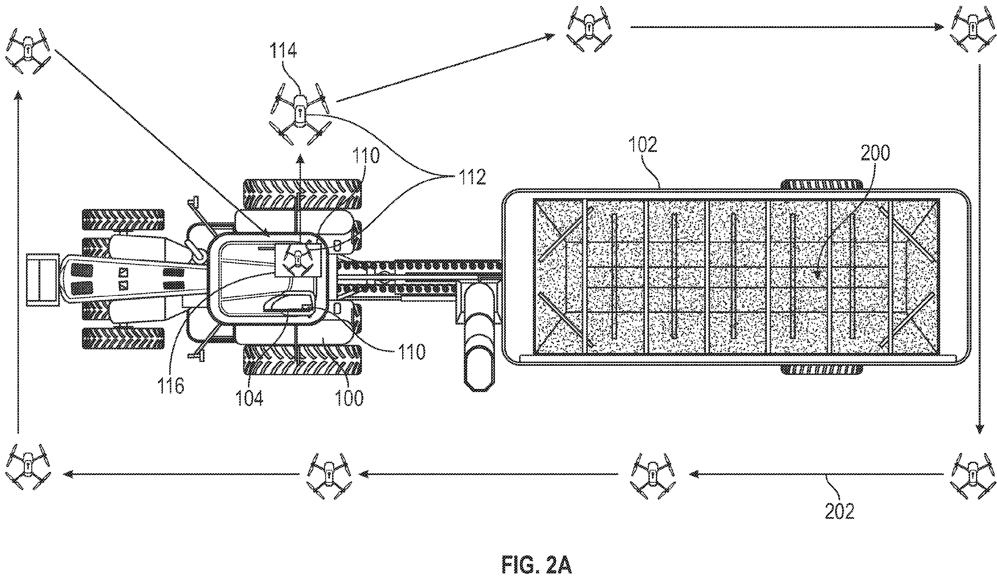

Figure 2A is a top view of the agriculture system 100 previously shown in Figure 1. In this example, the agricultural system 100 is shown with the autonomous obstacle monitoring and vehicle control system 110 conducting an inspection of the agricultural system 100. For instance, as shown in Figure 2A, the remote sensing device 114, in this example, a drone having one or more sensors thereon, is instructed to, is guided by or is controlled in a manner that causes the remote sensing device 114 to engage in an inspection of one or more of the agricultural system 100 or area proximate to the system 100. In the example shown in Figure 2A, the remote sensing device 114 conducts an inspection, for instance, along an inspection route 202 extending around the agricultural system 100. In other examples, the inspection route 202 extends over or along one or more sides of the system 100 or is directed to one or more specified components of the agricultural system 100 including, for instance, the associated agricultural implement 102 (a grain cart), one or more of the wheels of the agricultural implement or of the vehicle or one or more other components, for instance, the hitch, one or more forward-leading implements such as harvester head, spray booms or the like.

As shown in Figure 2A, when conducting the inspection mission, the remote sensing device 114, in this example, a drone, departs from the docking station 116, optionally after receiving an inspection route such as the inspection route 202. In another example, the remote sensing device 114 is controlled in an active manner, for instance, by the autonomous agricultural system controller 104 while conducting the inspection along the inspection route 202. The remote sensing device 114 conducts the inspection mission and docks at the docking station 116, for instance, to download information such as observations made by the sensing device, to recharge the remote sensing device 114 or the like. In another example, the remote sensing device 114 is interconnected with the agricultural system 100, for instance, the autonomous agricultural system controller 104 of the system 110 while conducting the inspection while travelling along the inspection route 202. For instance, the remote sensing device 114 is connected wirelessly with the autonomous agricultural system controller 104 and provides real time or near real time transmission of observations from the onboard sensors associated with the remote sensing device 114 for interpretation by the autonomous obstacle monitoring and vehicle control system 110.

In one example, the observations made with the remote sensing device 114 are interpreted by the obstacle recognition module, optionally a component of the autonomous agricultural system controller 104 or another component of the agricultural system 100 (e.g., onboard the agricultural system) or with one or more remote systems, for instance, associated with the autonomous obstacle monitoring and vehicle control system 110 such as a mobile device, cloud, a computing environment or the like. In still another example, obstacle recognition is conducted with the remote sensing device 114, for instance, with an onboard processer provided thereon.

Referring again to Figure 2A, one example of an obstacle, a diagnostic obstacle 200, is shown. The remote sensing device 114 travels around the agricultural implement 102 and, in one example, observes the interior of the grain cart. The diagnostic obstacle 200 includes observation of the fullness or degree of filling of the grain cart implement 102. For instance, the remote sensing device 114 observes the amount of grain retained within the implement 102 and either in real time (through transmission from the remote sensing device to the controller 104) or upon docking with the docking station 116 information such as observations of the implement 102 including the fill level of the grain cart is provided to the autonomous obstacle monitoring and vehicle control system 110 to identify the diagnostic obstacle, for instance, corresponding to a full or nearly full (90% or more) grain cart. In one example, the autonomous obstacle monitoring and vehicle control system 110 after identifying the diagnostic obstacle 200 initiates control of the agricultural system 100, for instance, to guide the agricultural vehicle toward a repository, dump site, secondary truck or the like for offloading of grain from the implement 102.

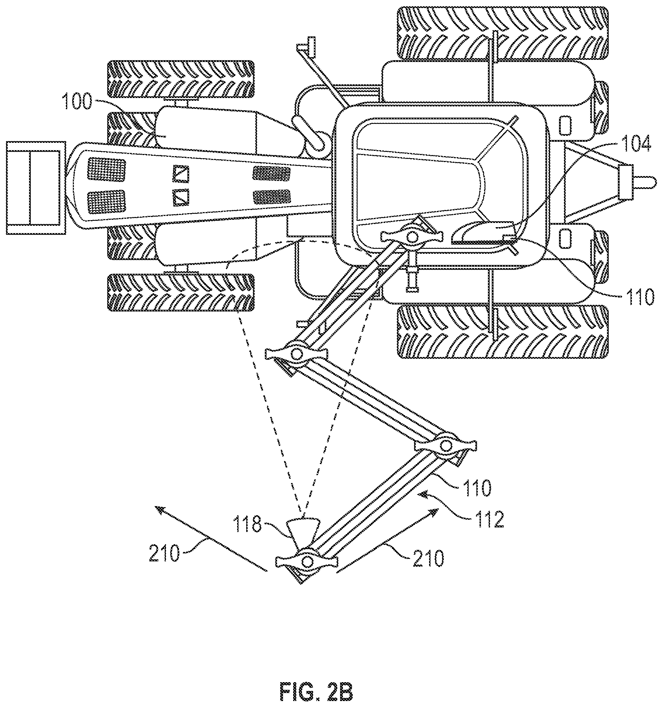

Figure 2B is another example of the agricultural system 100 having a remote sensing device 118 including, but not limited to, a moveable or articulating boom, arm or the like including one or more sensors provided at a location along the remote sensing device 118. In the example shown in Figure 2B, the remote sensing device is provided proximate to a distal end of the remote sensing device 118 and accordingly is configured to scan along the dashed scan lines extending toward the agricultural system 100. In a similar manner to the system shown in Figure 2A, the remote sensing device 118 is, in one example, in communication with the autonomous agricultural system controller 104. The controller 104 is configured to communicate with and control the agricultural vehicle of the agricultural system 100 according to one or more obstacles observed with the remote sensing device 118 and interpreted or identified with the obstacle recognition module described herein. The remote sensing device 118 as well as the autonomous agricultural system controller 104 are, in one example, components of the autonomous obstacle monitoring and vehicle control system 110 described herein. In another example, the system 110 further includes a supplemental remote sensing device such as the remote sensing device 114 (a drone). For instance, in one example, the system 110 includes one or more remote sensing devices such as the sensing devices 114 (e.g., a drone) as well as the remote sensing device 118. Optionally, the remote sensing devices 114, 118 are used alone or in combination to provide additional or enhanced obstacle recognition for the autonomous obstacle monitoring and vehicle control system 110.

In the example shown in Figure 2B, the remote sensing device 118 is coupled with a location of the agricultural system 100. For instance, the remote sensing device 118 is, in one example, coupled at its proximal end to a cab or other elevated component of the agricultural system 100. In another example, the remote sensing device 118 is coupled with another component of the agricultural system, for instance, a deployment box, storage box or the like coupled at the rear of the agricultural system, over the engine cab or along one or more of the sides of the agricultural system 100. Upon receiving instructions, for instance, from the autonomous obstacle monitoring and vehicle control system 110, such as the controller 104. the remote sensing device 118 deploys, for instance, into the deployed configuration shown in Figure 2B, and conducts movements of the remote sensing device 118 relative to the remainder of the agricultural system 100. As shown in Figure 2B. the remote sensing device 118 is moved along an inspection route 210, for instance, including one or more of left and right, rotational movement or the like, of the remote sensing device 118 relative to the agricultural system 100. In one example, the remote sensing device 118 is configured to move the associated sensors in a circuitous or circumscribing path around the agricultural system 100. In another example, the remote sensing device 118 is configured to move along an inspection route and extends along a portion or around a portion of the agricultural system 100. for instance, toward or directed to one or more specified components of the agricultural system 100 such as the wheels, engine compartment, an implement or the like. In another example, the inspection route 210 extends in a non-circuitous path, for instance, by elevating the remote sensing device 118 or a distal end having the one or more sensors thereon above the vehicle to direct the remote sensing device in a downward fashion to look down on the vehicle in a plan type view or top view.

In still other examples, as described herein, the inspection route 210, in another example, includes turning or directing the sensors of the remote sensing device 118 in different directions relative to the agricultural system 100 including, but not limited to, directing the sensors along a determined path outwardly away from the agricultural system 100, for instance, to detect one or more of diagnostic or field obstacles proximate to the agricultural vehicle along or proximate to the determined path or the like. In a similar manner, the remote sensing device 114 shown in Figure 2A in other examples, is also configured to direct its sensors in an outward manner or along a determined path as described herein.

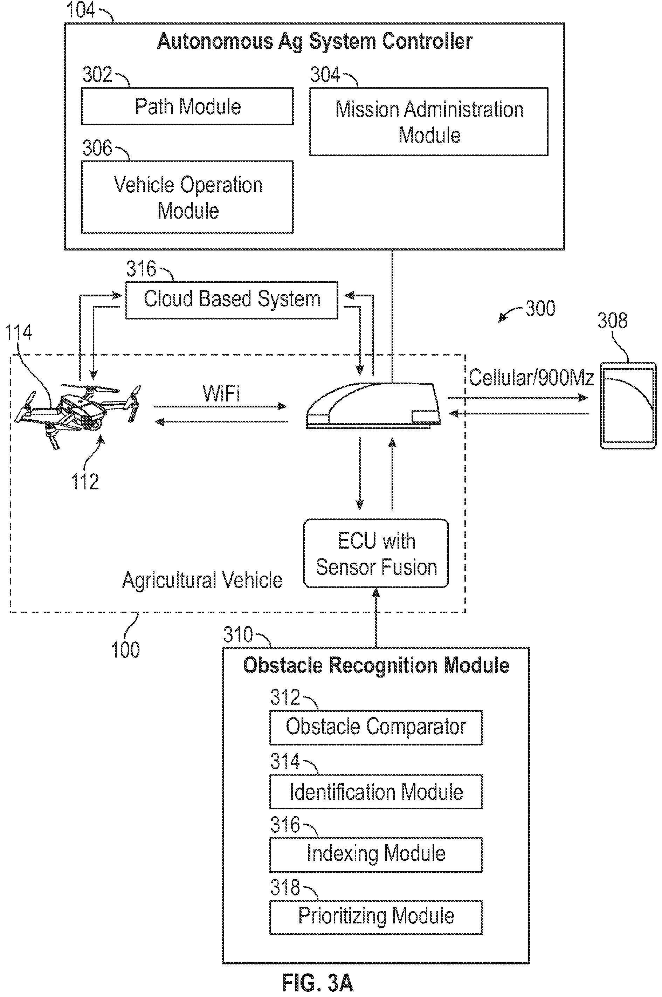

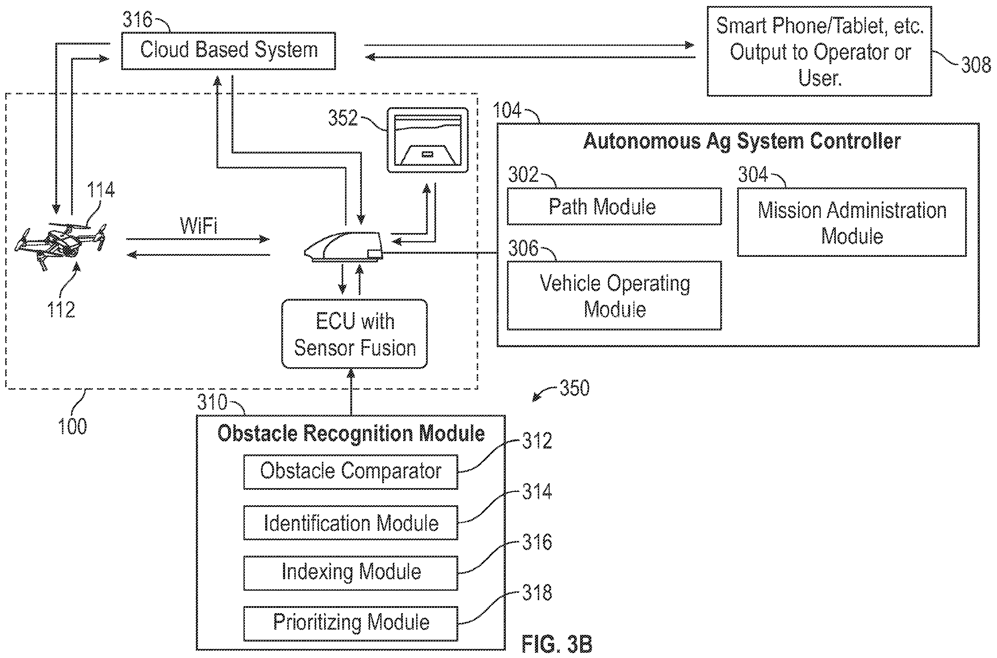

Figures 3A and 3B are examples of autonomous obstacle monitoring and vehicle control systems 300, 350 (referred to in some places as system or systems 300, 350). Referring first to Figure 3A, the system 300, in this example, is associated with an agricultural system 100 including, for instance, one or more of an agricultural vehicle, implement, combination of the same or the like. In the example shown, the system 300 includes a remote sensing system 112 including, for example, a remote sensing device 114 such as a drone (e.g., one or more of an air-based or ground-based drone). In another example, the remote sensing device includes the remote sensing device 118 previously described herein including, for instance, a moveable or articulating arm or boom including one or more onboard sensors. Optionally, the system 300 includes one or both of the remote sensing devices 114, 118.

As further shown in Figure 3A. the autonomous obstacle monitoring and vehicle control system 300 includes the autonomous agricultural system controller 104. As previously described, the controller 104 includes a variety of component modules including, but not limited to, one or more of circuits or processers configured to execute instructions to accomplish one or more functions. The example architecture of the controller 104 shown in Figure 3A includes, for instance, a path module 302, mission administration module 304 and a vehicle operation module 306. As previously described, the vehicle operation module, in one example, includes an interface with the agricultural vehicle or implement that controls the agricultural vehicle or implement autonomously, for instance, by way of analysis of a planned path for the vehicle (e.g., provided by the path module 302) and modification or updating of the path according to obstacles observed with the remote sensing system 112 and identified with the obstacle recognition module 310 described herein. In other examples, for instance with observation by the remote sensing device 114 and identification of plants, weeds, characteristics of plants or weeds or the like as obstacles, operation of the agricultural implement of the system 100 is controlled. For instance, characteristics indicative of plant health, such as water content, color, weeds, pests or the like are in various examples obstacles that are subject to one or more of identification, indexing or prioritization as discussed herein with the obstacle recognition module 310. The vehicle operation module 306 is configured to control operation of associated agricultural implements, like sprayer booms (agricultural product application rate), spray nozzles (application rate, droplet size, spray pattern or the like), cultivator heads (discrete cultivation for identified weeds) or the like to address the identified obstacles.

In another example, the autonomous agricultural system controller 104 includes a path module 302. As previously described herein, the path module 302 receives one or more of determined or preplanned paths (guidelines, swaths, turn segments or the like) for the agricultural vehicle to provide initial automated control, direction and guidance of the agricultural vehicle, implement or the like, for instance, within a field. In another example, the path module 302 is configured to provide ongoing generation of paths such as guidelines, swaths, turn segments or the like for the agricultural vehicle to move through a field and conduct one or more agricultural operations. As described herein, the paths determined with the path module 302 (e.g., generated, retained, received or the like) are modified or updated, according to obstacles identified and indexed, for instance, with the obstacle recognition module 310.

As further shown in Figure 3A, the autonomous agricultural system controller 104 includes the mission administration module 304. The mission administration module 304 includes one or more mission databases having missions stored therein, received therein or the like. The missions include one or more of mission names or types, associated mission routes or directions to provide one or more observational functions including, but not limited to, inspection of the agricultural system 100, diagnostic inspection of the agricultural system, for instance, while operating within a field, scouting of a determined path or the like.

In an example including the scouting mission, the mission administration module 304 guides the remote sensing device 114 along a determined path, for instance received from the path module 302, to accordingly observe one or more obstacles proximate to the determined path of the agricultural system 100. During the scouting mission, the remote sensing device 114 is configured to observe one or more of the path, the area proximate to the path or the like with one or more onboard sensors. The observations of the remote sensing device 114 are interpreted with the obstacle recognition module 310 to identify and index obstacles observed proximate to the determined path to facilitate modification of operation of the agricultural system 100, including navigation relative to the obstacles.

The mission administration module 104 operates the remote sensing device 114 through automated control of the remote sensing device 114 or uploading of a mission plan to the remote sensing device 114 for to facilitate conducting of the mission by the remote sensing device 114. In another example, the mission administration module 304 initiates performance of the mission, for instance, instructing the remote sensing device 114 to initiate movement relative to the agricultural system 100 to move the remote sensing device 114 along the determined path, along the mission route or the like. In another example, the mission administration module 304 initiates, conducts and terminates one or more of the missions stored within the mission administration module 304 with the remote sensing device 114 and optionally guides collection or retrieval of the remote sensing device 114, for instance, to the docking station 116 provided with the agricultural system 100.

As previously described, in one example, the autonomous agricultural system controller 104 includes a mission administration module. In another example, a cloud-based system 316 is also provided as a component of the autonomous obstacle monitoring and vehicle control system 300. In one example, the cloud-based computing system 316 provides an intermediate component or interface between the remote sensing device 114 and the autonomous agricultural system controller 104. In another example, the cloud-based system 316 provides further information to one or more of the remote sensing device 114 or the controller 104. For instance, the cloud-based system 316 provides one or more of the mission routes, mission types and associated mission routes or the like to the remote sensing device 114 by way of instruction from the autonomous agricultural system controller 104. In another example, one or more other components of the controller 104 or the obstacle recognition module 310 are provided by way of the cloud-based system 316. In another example, the obstacle recognition module 310, mission administration module 304 or, in some examples, the path module 302 are included as components of the cloud-based system 316 and accordingly are remote relative to (though in communication with) one or more of the remote sensing device 114, the autonomous agricultural system controller 104 or the like.

Optionally, an intermediate controller is interposed between the autonomous agricultural system controller 104 and the remote sensing device. In one example, the intermediate controller is a 'dock brain' associated with the dock station 116 shown in Figure 1. The dock brain uploads missions, mission routes or the like to the remote sensing device 114 that are received form the mission administration module 304. The dock brain optionally receives sensory observations from the remote sensing device 114 and relays the observations to either or both of the controller 104 or the obstacle recognition module 310. In other examples, components of the autonomous agricultural system controller 104 are provided with the dock brain including, but not limited to, the mission administration module 304 having missions, mission routes or the like, control of deployment, conduct of the mission and retrieval of the device 114.

As further shown in Figure 3A, the autonomous obstacle monitoring and vehicle control system 300 includes a user interface 308. The interface 308 provides input and output features including one or more of live sensor feeds, mission progress, logged obstacles (e.g., including, but not limited to, identified obstacles or obstacles indexed to locations, their vectors or the like). In another example, the user interface 308 provides notifications on the status of the remote sensing device 114, 118 (location, battery, progress on a mission or the like) as well as the agricultural system 100 including one or more of the agricultural vehicle, associated implements or the like. In some examples, the user interface 308 facilitates input of mission parameters, control of initiation, termination and change of missions conducted by the remote sensing system 112 including one or more of the sensing device 114 or the sensing device 118. In still other examples, the user interface 308 facilitates input of application rates, application rate algorithms or the like for use with the vehicle operation module 306. For instance, application rates are in one example varied based on observations made with the remote sensing device 114 (or 118). Crop health (e.g., crop characteristics, water content, fullness of foliage or canopy, height, color of the crop presence of pests, weeds or the like) is an example obstacle (or obstacles) for one or more of identification, indexing or prioritization with the obstacle recognition module 310 described herein.

In some examples, the user interface 308 includes, but is not limited to, one or more of a tablet computer, touchscreen, computer, smartphone, field computer or the like provided on or associated with the agricultural system 100. For instance, the user interface 308 is, in one example, a component of or installed within the cab of an agricultural vehicle such as a tractor, combine sprayer, truck or the like. In another example, the user interface 308 is optionally included as a component of another agricultural system, for instance, a companion agricultural system or one in communication with another agricultural system. In still another example, the user interface 308 is a component such as a smartphone, tablet computer or the like that is maintained separately relative to the agricultural system 100.

Referring again to Figure 3A, one example of an obstacle recognition module 310 is shown in communication with the remainder of the agricultural system 100. As shown in Figure 3A, the obstacle recognition module 310 is, in this example, a separate component relative to the autonomous agricultural system controller 104. The agricultural system 100 includes an electronic control unit (ECU, as shown in Figure 3A) that serves as the interface between the remainder of the system 300 and the obstacle recognition module 310. Optionally, the ECU associates disparate sensor information from multiple sensors on board the device 114 or sensor information from multiple devices 114, 118 or the like, and then delivers the associated 'fused' sensor information (e.g., observations) to the obstacle recognition module 310.

In another example, the obstacle recognition module 310 is incorporated with or included with the autonomous agricultural system controller 104. In still another example, the obstacle recognition module 310 is optionally included with one or more of the remote sensing devices 114, 118, for instance, to facilitate the identification and indexing of observed obstacles onboard the remote sensing devices. Further, the obstacle recognition module is, in another example, provided remote to the agricultural system 100, for instance through the cloud based system 316.

The obstacle recognition module 310 identifies and indexes obstacles. In one example, the obstacle recognition module 310 interprets sensory information received from one or more of the remote sensing devices 114, 118 by way of wireless communication between the remote sensing device 114 and the autonomous agricultural system controller 104 or direct (wired) communication, for instance, when the remote sensing device 114 docks with a docking station such as the docking station 116 shown in Figure 1. The obstacle recognition module is configured to interpret sensory data from the remote sensing devices, 114, 118 and identify one or more obstacles with the sensory data and index the detected obstacles. In another example, the obstacle recognition module 310 is configured to prioritize identified obstacles as discussed herein.

As shown in Figure 3A. the obstacle recognition module includes, in various examples, modules (including one or more circuits, processers configured to execute instructions or the like) including an obstacle comparator 312. identification module 314, an indexing module 316 and a prioritizing module 318. The obstacle comparator 312 and the identification module 314 are configured to interpret sensory data from the remainder of the autonomous obstacle monitoring and vehicle control system 300 (e.g., from the remote sensing devices 114 (or 118) or other sensors associated with the system 100) to identify obstacles. For example, the obstacle recognition module 310 includes (or is configured to communicate with) a database of archived obstacles having associated archived obstacle characteristics. The archived obstacle characteristics include, but are not limited to, one or more of pixels, pixel arrangements or the like (or other obstacle characteristics for different observations types, like non-visual sensors) that are comparable with corresponding observations from the remote sensing device 114. The pixels, arrangements of pixels or the like provide pixel attributes that correspond to shapes, color, brightness, patterns, groupings of pixels or the like that resemble images or components of images of archived obstacles. Comparison of the observations from the remote sensing device with the archived characteristics using the obstacle comparator 312 facilitates the identification of obstacles relative to archived obstacles, for instance with comparisons that reach a specified threshold of similarity (e.g., 40, 50, 60, 70, 80 percent confidence or greater or the like). As discussed herein, artificial intelligence comparison of archived characteristics of archived obstacles to observations are used to conduct identification, and in other examples the observations and identification of observations as obstacles update and refine future identification (e.g., an example of deep learning or teaching neural networks).

In still other examples, the obstacle recognition module 310 is configured to compare sensory data, for instance, from other non-visual sensors including one or more of chemical sensors, thermographic sensors, hyperspectral sensors, ground penetrating radar, radar, LIDAR or ultrasound sensors. The obstacle recognition module 310, for instance with the obstacle comparator 312, compares the observations with corresponding archived characteristics comparable to the observation type (e.g., radar characteristics are compared with radar observations or the like).

In one example, one or more of the obstacle comparator 312 or the identification module 314 includes an onboard or remote artificial intelligence module configured to identify obstacles from the sensor feeds of an observed area (e.g., proximate to a determined path, proximate to the vehicle or the like) with one or more neural networks. The networks receive sensor data, for instance, images, video, return signal ranging information, thermographic observations, spectragraphic observations, radar observations, LIDAR observations, ultrasound observations or the like. The obstacle comparator 312 (for instance, an artificial intelligence neural network) processes that information through a plurality of layers that compare the observations with archived characteristics of archived obstacles. For instance, the one or more neural networks, in one example, look for pixel attributes representing shape, brightness and groupings that resemble image characteristics the neural network has previously been trained for, for instance, with previous comparisons. In another example, the one or more neural networks compare thermographic or spectragraphic archived characteristics with thermographic or spectragraphic information provided by the remote sensing device 114 (or 118) observations. This process is optionally repeated for other sensor observation formats (e.g., radar, LIDAR or the like) with comparison to corresponding archived characteristics.

Obstacles within the transmitted observation data from the remote sensing device 114 include image characteristics that match or approximate stored archived characteristics of the one or more neural networks, optionally within a probability. For example, where a truck drives into the field of view of an RGB camera sensor associated with the remote sensing device 114. the one or more neural networks of the obstacle comparator 312 compare observations of the truck with archived characteristics of a variety of obstacles. The identification of the obstacle includes, in one example, a category or label, for instance, truck, human, livestock, fence, washout, brush or the like with an optional probability or confidence of the identification (for instance, a 90 percent confidence, 70 percent confidence, 50 percent confidence or the like). The identification module 314 selects the closest (e.g., highest confidence) comparison and assigns a label to the obstacle, such as "truck" and an optional probability or confidence of identification, for instance, a 90 percent confidence based on the comparison conducted with the comparator 312. Where a probability is included, the probability facilitates the filtering of false positives once a baseline accuracy for obstacle identification, for instance, of one or more categories of obstacles or different types of obstacles is known.

In another example, the identification module 314 identifies a potential obstacle from the observations if the confidence of the obstacle comparison at the comparator 312 is greater than a specified threshold, such as a threshold confidence value or the like (e.g., 40, 50, 60, 70, 80 percent or more likelihood of identification or the like). In the example with the previously identified truck, if the highest confidence from the comparison conducted with the obstacle comparator 312 was below a threshold confidence, such as 50 percent, the identification module 314 may withhold identification and optionally tag the potential obstacle for further investigation such as further observation with the remote sensing device 114.

The pre-trained or ongoing trained neural network as the obstacle comparator 310 allows for rapid analysis of incoming signals, for instance, from the remote sensing device 114 to facilitate comparison to archived characteristics and identification of obstacles as provided herein above. Additionally, the pre-trained or ongoing trained neural networks also facilitate continued training of the neural networks (e.g., an example of deep learning), for instance, with the ongoing monitoring conducted with the remote sensing device 114 and ongoing comparisons. The continued training enhances identification of obstacles as the neural network (e.g., obstacle comparator 310) continues to refine archived characteristics, associated archived obstacles, and increase the confidence of identification while at the same time learning new obstacles from observations from the remote sensing device 114. Optionally, the comparisons and identifications (e.g., of the comparator 310 and identification module 312) are conducted across a plurality of systems 300 and the refined archived characteristics, associated archived obstacles, and newly learned obstacles from other systems 300 are consolidated in a client network (e.g., as part of a cloud based system) that facilitates a global enhancement of identification of obstacles.

In other examples, the identification module 314 is configured to associate or match various sensor observations, for instance, from one or more different sensor types associated with the remote sensing device(s) and accordingly provide component comparisons between the archived characteristics and their associated sensor observations, for instance, one or more of optical or video archived characteristics are compared against corresponding optical or video observations from the remote sensing device 114. In another example, thermographic archived characteristics, hyper spectral archived characteristics, radar characteristics or the like are compared with corresponding sensory observations from the remote sensing devices 114. In various examples, the comparisons between these archived characteristics and the associated sensory observations from different sensors facilitate the enhanced identification of obstacles. The comparisons are conducted in concert or in tandem to enhance the identification of obstacles, for instance, to provide a higher confidence that the obstacle identified has been properly identified. In one example, the identification module 312 identifies an obstacle, such as a cow, with a 60 percent component confidence based on a comparison of thermal characteristics with thermal observations and a 90 percent confidence based on a comparison of visual characteristics with visual observations. Because the component identifications and associated confidences are similar (e.g., identifying an obstacle as the same) the confidence of the identification may be scaled or multiplied to a composite value greater than one or both of the component confidences (e.g., 95 percent).

In another example, the identified obstacle such as a human, livestock or the like has a lower confidence value where one or more of the comparisons, for instance, between thermographic archived characteristics and thermographic observations and visual archived characteristics and visual observations differs. For instance, if the comparison of visual archived characteristics with corresponding visual observations indicates the presence of livestock (e.g., greater than 50 percent) while the associated thermographic comparisons do not indicate livestock (e.g., less than 50 percent) the identification of the obstacle is accordingly assigned a lower composite confidence value, for instance, 50 percent confidence value or less relative to a 90 percent or 95 percent confidence value when the comparisons between various archived characteristics and the associated sensory observations correspond.

In another example, the indexing module 316 is configured to index the identified object, for instance, by way of location relative to the vehicle, relative to a coordinate system, relative to other obstacles or reference points in a field or the like. In one example, the indexing of the obstacle includes, but is not limited to, determining a vector or other kinematic characteristic associated with the obstacle. For instance, one or more of livestock, humans, vehicles within a field or the like in addition to having a location may also have one or more kinematic characteristics including acceleration, velocity or the like. The indexing module 314 is configured to determine associated kinematic characteristics and index them to the identified obstacle. For instance, an obstacle is monitored over time to assess kinematic characteristics, and where movement is detected the indexing module 314 appends the characteristics as a vector or other indicator corresponding to the detected movement. Optionally, the vector has an origin corresponding to a present location of the identified obstacle. In another example, comparisons of multiple observations of obstacles with corresponding archived characteristics are conducted, and changes in comparisons indicate movement including magnitude and direction. A corresponding vector is then appended to the obstacle. As described herein, the kinematic characteristics including, for instance, velocity, location, acceleration or the like are used to enhance the autonomous control of the agricultural system 100. For instance, control of the agricultural system 100 is conducted with the vehicle operation module 306 according to the identification of the obstacles and indexing of obstacles including predicted future paths (based on kinematic characteristics, such as appended vectors) of the obstacles.

In another example, the obstacle recognition module 310 includes a prioritizing module 318. The prioritizing module 318 is configured to assign priorities to obstacles based on a catalog set of priorities, priority rules, user input priorities or user input priority rules or the like. In one example, archived obstacles such as humans, livestock or the like have a higher priority relative to other identified obstacles including, for instance, brush, washouts, rocks, saturated or soaked areas of the field or the like. As described herein, the assigned priority of an identified object changes the operation of the agricultural system 100, for instance with the vehicle operation module 306 of the autonomous agricultural system controller 104.

In one example, the identification of a human proximate to a determined path of the agricultural system 100 is given a high priority while other obstacles such as livestock, brush, fence or rocks or the like proximate to the determined path are given a lower priority (and optionally scaled lower priorities with livestock higher than brush or similar inanimate obstacles). For instance, the prioritizing module 318 assigns a higher priority to particular types of obstacles, for instance, humans or the like. In other examples, the prioritizing module assigns a priority based on probability of the identification (e.g., confidence), for instance, a rock that is identified with a smaller probability is assigned a lower priority relative to a rock identified with a higher probability. In other examples, the proximity to the agricultural system 100 or the determined path of the agricultural system 100 triggers the assignment of a higher priority to an identified obstacle in comparison to the same identified obstacle that is not proximate to the determined path or is not proximate to the agricultural system 100. In other examples, the proximity to the determined path or the agricultural system is also triggered by the vector of the identified obstacle (where present) in addition to or instead of the index location of the obstacle.

The priorities of identified obstacles are provided to the vehicle operation module 306, and the vehicle operation module 306 accordingly conditions the operation of the agricultural system 100. In one example, a higher priority obstacle may trigger the halting of operation of the agricultural system 100 (e.g., halted operation). A lower priority obstacle may trigger modified operation of the agricultural system 100, for instance, by way of navigating the system 100 around the obstacle, moving the system 100 in a direction that guides the agricultural system 100 away from the vector of travel of a moving obstacle such as a secondary vehicle, human, livestock or the like.

In operation, the obstacle recognition module 310 cooperates with and communicates with other components of the autonomous obstacle monitoring and vehicle control system 300 to identify and track obstacles and facilitate enhanced guidance of the agricultural system 100 through the field while still allowing the agricultural system 100 to accomplish one or more agricultural processes. The remote sensing device 114 is deployed by the autonomous agricultural system controller 104 by way of a mission administration module 304 providing a mission route to the remote sensing device 114 or, in another example, guiding operation of the remote sensing device 114 along a mission route. The remote sensing device 114, while conducting the mission, observes the area proximate to a determined path, proximate to the agricultural system 100 or the like, for instance, along a corresponding mission route for the remote sensing device 114. In some examples, the mission route is provided around or proximate to the agricultural system 100 and, in other examples, is provided along the determined path of the agricultural system 100. for instance, along one or more guidance lines, turn segments or the like. The remote sensing device 114 observes the area proximate to the determined path proximate, to the agricultural system 100 or the like.

The observations (e.g., sensor data) form the remote sensing device are conveyed to the controller 104, for instance, when docked to the docking station 116 or in a wireless manner, for instance, by wireless communication with the controller 104. The autonomous agricultural system controller 104 passes the observations to the obstacle recognition module 310 for identification and indexing of obstacles with one or more of the obstacle comparator 312, the identification module 314, or the indexing module 316. In some examples, identification and indexing of obstacles includes tracking movement of the obstacles, for instance, by way of updated sensory information provided by the remote sensing device 114 continuing with additional mission controlled movement and continued or repeated observation of obstacles along the mission route.

As previously described, the obstacle recognition module 310 optionally includes a prioritizing module 318 that prioritizes the identified obstacles including prioritization based on one or more of the proximity of the object relative to the agricultural system 100 relative to the determined path of the agricultural system 100 or based on the identity of the object itself. For example, humans, livestock, other vehicles or the like may have a higher priority relative to lower priority obstacles, such as brush, washouts, fences, rocks or the like.

The identified obstacles including, for instance, their identification, confidence value of the identification, indexing of location or vectors or the like as well as optional prioritizations are passed to the autonomous agricultural system controller 104, for instance, to the vehicle operation module 306. For an agricultural operation, the vehicle operation module 306 analyzes the determined path of the agricultural system 100, such as initial guidance lines, swaths, turn segments or the like in combination with the identified and indexed obstacles proximate to the determined path. The vehicle operation module 306 generates an updated or modified path based on the identified and indexed obstacles, obstacle priorities or the like. The vehicle operation module 306 implements guidance of the agricultural system 100 according to the modified or updated path generated with the autonomous obstacle monitoring and vehicle control system 300.

The identification of obstacles, including tracking obstacles, is repeated in a continuous or ongoing manner. For example, the remote sensing device 114 repeatedly travels proximate to a determined path, a scouting route, diagnostic route or the like and observations of the device 114 update obstacles already identified (e.g., identity, confidence of the identification, location, movement or the like) or facilitate identification of previously undetected obstacles. The updated indexing and identification of obstacles, identification and indexing of new obstacles, as well as obstacle priority is communicated to the remainder of the system 300, for instance, the vehicle operation module 306 to facilitate enhanced and updated guidance of the agricultural system 100.

In one example, the assigned priorities trigger conditional responses with the autonomous agricultural system controller 104 including one or more of halted operation, for instance, with a high priority identified obstacle such as a human or livestock within proximity to the determined path or within proximity to the agricultural system 100. In another example, the autonomous agricultural system controller 104 includes other conditional responses in addition to a halt operation response. These example operations include, but are not limited to, a normal operation, modified operation or the like. In normal operation, the identified obstacle, in one example, has a lower priority and does not trigger modification of the operation of the agricultural vehicle, for instance, by the vehicle operation module 306. In other examples, the identified obstacle has a higher priority but does not otherwise trigger halted operation of the agricultural system 100. In this example, a modified operation is instituted by the vehicle operation module 306 including, but not limited to, navigating around the lower priority identified obstacle with an updated path (e.g., including real time navigation, a planned path based on the obstacle and the initial path or the like), alerting an operator that intervention is needed or conducting additional missions, for instance, with the remote sensing device 114 such as a scout mission to further identify the obstacle or refine indexing of the obstacle location or vector proximate to the determined path or proximate to the agricultural system 100.

The obstacle recognition module 310 described herein is, in one example, a component of the system 300, such as the autonomous agricultural system controller 104. In this example, one or more of the archived characteristics of various archived obstacles as well as associated priorities are included with the controller 104 and accordingly provided in an onboard fashion with the remainder of the system 300 associated with the agricultural system 100. The obstacle recognition module 310 is optionally updated on a regular or semi-regular basis with updated archived obstacles and associated characteristics, for instance with a jump drive, download from a cloud based system 316 or the like. In another example, obstacle recognition conducted with the module 310 is conversely uploaded to the cloud based system to enhance obstacle recognition in other modules 310 of other systems 300 (e.g., on a client network or the like) by further populating archived characteristics to archived obstacles. A trained neural network (e.g., the obstacle comparator 312 discussed herein) is an example of a comparator that is enhanced over time through population of archived characteristics, archived obstacles, refinements to archived characteristics and entry of newly identified obstacles.

In still another example, the obstacle recognition module 310 is remote relative to the agricultural system 100 and provided as part of the cloud-based system 316 that is configured to receive sensory information (observations) from the remote sensing device 114 and then return identified obstacles, their priorities, as well as indexing of the obstacles (position, vector or the like) to the controller 104 for implementation of enhanced vehicle guidance by way of modification or updating of guidance of the agricultural system 100.

As previously shown and discussed herein, the various components of the autonomous obstacle monitoring and vehicle control system 300 are interconnected with one or more of wired or wireless interfaces. For instance, the remote sensing device 114, in one example, a drone is interconnected with the autonomous agricultural system controller 104 by way of a wireless connection. In another example, the remote sensing device 114 interconnects with the controller 104 upon docking with an associated docking station 116 shown, for instance, in Figure 1. Information is provided in a wired manner from the remote sensing device 114 to the controller 104 for use with the obstacle recognition module 310. In another example, the obstacle recognition module 310 is wirelessly connected with the remainder of the autonomous system 300, for instance, by way of a cloud-based system 316. Wireless connections include, but are not limited to, one or more of Wi-Fi, Bluetooth, cellular, radio-based systems or the like. In other examples, each of the components of the autonomous obstacle monitoring and vehicle control system 300 are connected by one or more of wireless or wired connections. For instance, one or more of the autonomous agricultural system controller 104 is, in one example, interconnected with the electronic control unit having sensor fusion with a wired connection (that in turn provides the interface to an onboard version of the obstacle recognition module 310). In other examples, components of the autonomous agricultural system controller 104 are connected with other components of the agricultural system 100 by way of wired connections (e.g., with a bus, CAN bus or the like) including, but not limited to, one or more of steering controls, throttle controls, braking controls, shifting controls, implement controls, vehicle mounted sensors or the like.

Figure 3B is another example of an autonomous obstacle monitoring and vehicle control system 350. System 350 shown in Figure 3B is similar in some regards to the system 300 previously shown and described in Figure 3A. For example, the system 350 includes one or more remote sensing devices such as the remote sensing device 114 including a drone. In another example, the system 350 includes a remote sensing system 112 including, for instance, the remote sensing device 114 as well as a docking station 116 coupled with the agricultural system 100 (e.g., one or more of an agricultural vehicle, implement or the like). The system 350 further includes an autonomous agricultural system controller 104. In one example, the controller 104 includes a path module 302, mission administration module 304 and a vehicle operating module 306 as previously described with regard to the system 300.

As further shown in Figure 3B, the autonomous obstacle monitoring and vehicle control system 350 includes a field computer 352. The field computer 352 is a user interface providing input and output functionality for the agricultural system 100 as well as the system 350. The field computer 352 includes a path module configured to generate or receive guidance routes for the agricultural system 100 including one or more of guidance lines, swaths, turn segments or the like. In one example, the field computer 352 communicates an initial path including one or more of guidelines, swaths, turn segments or the like to a companion path module 302 of the autonomous agricultural system controller 104. The path module associated with the field computer 352 provides an initial path for automated operation of the agricultural system 100. The path module 302 of the controller 104 in turn cooperates with the vehicle operating module 306 to conduct guidance, such as automated driving, of the agricultural system 100. In another example, the vehicle operating module 306 receives the identified and indexed obstacles from the obstacle recognition module 310, and updates (e.g., modifies, changes, supplements or the like) the initial path received from the field computer 352 (directly or indirectly through the path module 302) to an updated path including navigation around or relative to one or more obstacles identified and indexed by the obstacle recognition module 310. In various examples, the updated path includes one or more of the initial path with real time automated steering to navigate relative to obstacles, the initial path modified with planned navigation relative to obstacles, or the like.

As further shown in Figure 3B, the autonomous obstacle monitoring and vehicle control system 350 also includes an obstacle recognition module 310, for instance, interconnected with the remainder of the system 350 by an electronic control unit (ECU) optionally providing sensor fusion. In one example, sensor fusion includes the merging or association of sensor data (e.g., observations) received from a plurality of sensors associated with one or more remote sensing devices such as the sensing device 114 (e.g., a drone, ground drone, air drone, both or the like) or a remote sensing device 118 including an articulating arm, boom or the like. The ECU relays or transmits the observations of the remote sensing device 114 to the obstacle recognition module 310 for interpretation of the observation data to identify and index one or more obstacles, for instance with the obstacle comparator 312, identification module 314, indexing module 316 and prioritizing module 318 discussed herein.

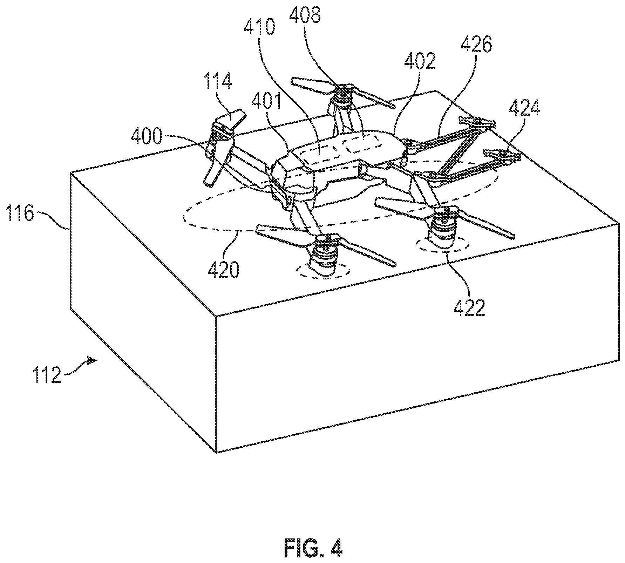

Figure 4 is a perspective view of one example of a remote sensing system 112 including a remote sensing device 114, such as a drone. As shown, the remote sensing device 114 is coupled with a docking station 116 that is a component of the remote sensing system 112 in this example. As shown in Figure 4, the remote sensing device 114 includes a drone body 401 including one or more propulsion devices including, for instance, propellers. In the example shown in Figure 4, the remote sensing device 114 is an aerial drone including a quad-copter. In other examples, the remote sensing device 114 includes a ground-based drone. In still other examples, the remote sensing device 114 used with the remote sensing system 112 includes a plurality of remote sensing devices including a plurality of drones, a plurality of moveable or articulating booms or arms, combinations of drones and arms or the like.

As further shown in Figure 4, the remote sensing device 114 includes one or more sensors represented with the sensor suite 400. In one example, the sensor suite 400 includes the one or more sensors that conduct observations of the area proximate to a determined path, proximate to an agricultural system, such as the system 100, including one or more of an agricultural vehicle, implement or the like. The sensor suite 400 includes one or more of optical or visual light based sensors such as an RGB sensor, camera, video camera or the like to visually observe obstacles such as obstructions, diagnostic issues, plants (e.g., crops or weeds), plant characteristics (foliage density, height, color, hydration, pests or the like. In other examples, the sensor suite 400 includes, but is not limited to, an infrared or thermographic sensors (e.g.. to easily detect humans, animals, livestock or the like), a multi-spectral or hyper-spectral camera (to detect water, mud, washouts, bodies of water or the like). In still other examples, the sensors included with the sensor suite 400 include, but are not limited to, chemical sensors; optical sensors, including cameras and video cameras; spectrometric sensors, RGB (red-green-blue) sensors, infrared sensors, thermographic sensors, hyperspectral sensors, ground penetrating radar, radar, LIDAR, ultrasound or chemical sensors.

In another example, a global positioning system (GPS) unit or fiducial provided with the remote sensing device is another example of a sensor included with the sensor suite 400. The GPS unit is operated to track the remote sensing device 114 location and facilitate retrieval of the remote sensing device 114, for instance, at the docking station 116. In another example, the GPS unit is used for gross control or operation of the remote sensing device 114 to guide the remote sensing device 114 toward the docking station 116. and then one or more other sensors of the sensor suite 400 are operated (cameras, video cameras or the like) to detect the docking station 116 and enhance the precision of landing (retrieval) of the remote sensing device 114 at the docking station 116.

As further shown in Figure 4, the remote sensing device 114, in this example, a drone, includes a power and data port 402 that facilitates the charging, recharging or the like of the remote sensing device 114. In another example, the power and data port 402 facilitates the uploading and downloading of information from the remote sensing device 114. For instance, the remote sensing device is configured to receive one or more instructions, packages of instructions or the like, from the autonomous obstacle monitoring and vehicle control systems 300, 350 described and shown in Figures 3A and 3B. For instance, one or more of scout missions, diagnostic missions, inspection missions or the like are uploaded to the remote sensing device 114 to facilitate its autonomous operation, for instance, proximate to a determined path (along or along an adjacent path), proximate to the agricultural system or the like.

In other examples, the remote sensing device 114 includes a data transceiver 408. In one example, the data transceiver relays information with a wireless connection to one or more components of the autonomous obstacle monitoring and vehicle control system 300, 350. In one example, the data transceiver 408 is used instead of the power and data port 402 for information relaying, and handles information uploads and downloads between the remote sensing device 114 and the remainder of the system 300, 350. In another example, the data transceiver 408 works in concert with or in combination with the power and data port 402 to relay information while the remote sensing device 114 is deployed from the agricultural system 100. Upon landing, the remote sensing device 114 uploads and downloads data through the power and data port 402. The data transceiver 408 conducts transmissions with the remainder of the autonomous obstacle monitoring and vehicle control system with one or more wireless formats including, but not limited to, cellular communications, 900 megahertz or radio frequency communications. Wi-Fi networks or the like.

As further shown in Figure 4, the remote sensing device 114 optionally includes a GPS or RTK unit. As previously described the GPS unit is optionally associated with the sensor suite 400. In another example, the GPS unit 410 is provided separately from the sensor suite 400. The GPS unit 410 indexes the position of the remote sensing device 114. In another example, a compansion GPS unit and real time kinematics (RTK) system associated with the agricultural system 100 enhances GPS resolution of the remote sensing device 114 location relative to the agricultural system 100. In one example, the autonomous agricultural system controller 104 relays the adjustment provided by the GPS and RTK units (e.g., onboard the system 100) to the remote sensing device 114 to facilitate recognition by the remote sensing device 114 of a more exact or enhanced location of the agricultural system 100, for instance, for landing. In other examples, the refined resolution provided by the GPS or RTK units facilitates enhanced guidance of the remote sensing device 114 along or proximate to a determined path, proximate to the agricultural system 100 or the like. In another example, the GPS or RTK units as well as associated components provided with the remainder of the systems 300, 350 are configured to use a wide area augmentation system (WAAS) correction with the GPS units to approach the agricultural system 100 or the docking station 116. The WAAS correction facilitates enhanced guidance of the remote sensing device 114 to its retrieval location, such as the docking station 116. Optionally, on approach for landing (with either of RTK enhanced resolution or WAAS enhanced resolution) the remote sensing device 114 uses the sensor suite 400 to identify the docking station 116 or other corresponding location on the agricultural system 100 having a visible fiducial marker or other marker configured for observation, and the remote sensing device 114 is guided toward landing at the appropriate location.

Referring again to Figure 4, one example of the docking station 116 is shown. The docking station 116, in this example, includes a visible fiducial marker 420 configured for observation by the sensor suite 400 of the remote sensing device 114. The visible fiducial marker 420 serves as a reference point to facilitate docking and landing at the docking station 116. In another example, the visible fiducial marker 420 is used as a reference point of operation of the remote sensing device 114, for instance, to measure its location relative to the agricultural system 100 while conducting a scouting mission, diagnostic mission, inspection mission or the like.

The docking station 116, in another example, includes one or more drone anchors 422 provided with the docking station 116. The one or more drone anchors 422 are configured to couple the remote sensing device 114 with the docking station 116 to securely dock the remote sensing device 114 when not deployed. When deployment is desired, the drone anchors 422 are released. For instance, one or more of electromagnets, mechanical latches or the like are released to free the remote sensing device 114 for deployment and operation in one or more of the missions described herein.

As further shown in Figure 4, the docking station 116 includes a power and data interface 426 configured to connect with the power and data port 402 of the remote sensing device 114. The power and data interface 426 provides power and relays information to and from the remote sensing device 114. Optionally, the power and data interface 426 is provided on an interface arm 424 that moves a cable, port or jack (e.g., examples of the power and data interface 426) to couple with companion ports on the drone, such as the power and data port 402.

In another example, the docking station 116 optionally includes a dock brain, as described herein, including one or more of circuits, processers or the like configured to retain information, instructions or the like for use with the remote sensing device 114. In one example, the dock brain receives mission information including mission names, mission routes or the like and relays the information from the autonomous agricultural system controller 104 to the remote sensing device 114. Optionally, the dock brain facilitates the rapid uploading and downloading of information to and from the remote sensing device 114 including sensory observations made with the sensor suite 400. In another example, the dock brain provides remote control of the remote sensing device 114 including guiding the device 114 according to mission routes, deploying of the device and retrieval of the device.

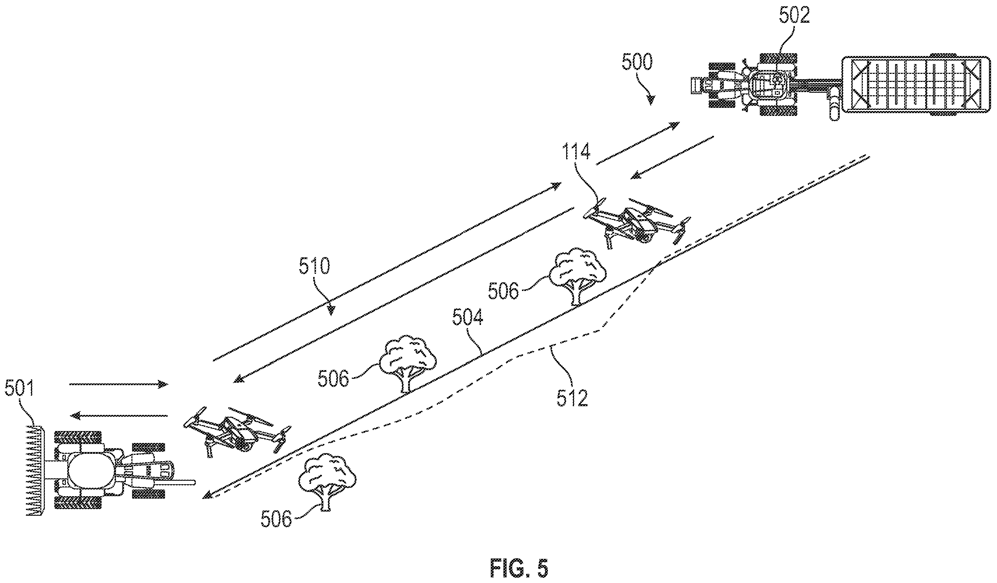

Figure 5 is a schematic view of one example of a scouting mission 500 conducted proximate a path extending between one or more agricultural systems, such as a first agricultural system 501 and a second agricultural system 502. As shown in Figure 5, the second agricultural system 502, in this example, is a combination of tractor and grain cart configured to approach the first agricultural system 501, a combine or harvester. The second agricultural system 502 is configured to approach the first agricultural system and receive harvested crops from the first agricultural system 501.

An initial path 504, such as a proposed path or the like, of the second agricultural system 502 extends from the second agricultural system 502 to the first agricultural system 501. Optionally, the initial path 504 is a dynamic path that changes as the first agricultural system 501 moves in a field (e.g., conducts harvesting). The initial path 504 is one example of a determined path, for instance, provided by the field computer 352 shown in Figure 3B or the path module 302 shown in Figures 3A, 3B. As further shown in Figure 5, a plurality of field obstacles 506 are proximate to the initial path 504. As shown, the field obstacles 506 interrupt the otherwise generally straight initial path 504 toward the first agricultural system 501.

In operation, a remote sensing device 114 is deployed from one or more of the first or second agricultural systems 501. 502 and conducts the scouting mission 500, for instance, along the scouting route 510 (e.g., proximate to the initial path 504). As shown in Figure 5, the remote sensing device 114 travels along the scouting route 510 and observes the area proximate to the initial path 504 of the second agricultural system 502 as it approaches the first agricultural system 501. Accordingly, the one or more sensors of the remote sensing device observe the field obstacles 506 along the initial path 504.

The observations of the remote sensing device 114 are relayed to the remainder of the autonomous obstacle monitoring and vehicle control system 300 (or 350) to identify and index obstacles such as the field obstacles 506 along the initial path 504. Referring to Figures 3A and 3B, the observations are relayed to one or both of the autonomous agricultural system controller 104 or the obstacle recognition module 310. The observations are analyzed with the obstacle recognition module 310 as discussed herein. The observations are passed through an obstacle comparator 312 to compare the observations with corresponding archived characteristics of archived obstacles. The identification module 314 identifies obstacles 506 from the observations (e.g., with one or more of a label, confidence of identification or the like) based on the comparison. Optionally, the identity of the obstacles 506 are assigned based on selection of the highest confidence among the comparisons conducted between the observations and archived obstacle characteristics. In an example, the identification module 314 shown in Figures 3A and 3B appends or labels the identified obstacles 506 with the appropriate label, confidence or the like.

In another example, an indexing module 316 of the obstacle recognition module 310 indexes the obstacles 506 with one or more of locations, vectors or the like to track the obstacles and enhance operation of the agricultural system 502 relative to the obstacles 506 in Figure 5. In another example, a prioritizing module 318, also shown in Figures 3A, 3B, assigns a priority to the identified obstacles 506, for instance, based on the confidence of identification, identification type (e.g., human, livestock, rock, fence, water or the like), its indexing including one or more of proximity relative to one or more of the initial path 504, relative to the second agricultural system 502 or the first agricultural system 501 or the like. Additionally, the indexing module 316 is optionally configured to index the identified obstacles with a boundary, offset or the like to facilitate navigation around the obstacles and minimize collisions. In an example, an obstacle boundary includes a region having a shape or contour approximating one or more obstacles therein. The boundary is expanded or dilated with respect to the obstacle to define an exclusion zone or mitigation region around the obstacle. In one example, the boundary is expanded or contracted based on an assigned priority (e.g., assigned with the prioritizing module 318) with higher priority obstacles having an expanded boundary. In still other examples, the boundary is expanded in a direction based on an indexed vector of a dynamic obstacle. The boundary is indexed to the identified obstacle to facilitate travel or operation of the agricultural system 502 along a path or route along the contour of the boundary without intersecting or impacting the identified obstacle therein. Additionally, the indexed boundary in another example provides a contour or profile to facilitate navigation around the obstacle (e.g., a curved boundary facilitates guidance along a corresponding curve to the boundary).

The identified and indexed obstacles 506 are relayed to the vehicle operating module 306 and the vehicle operating module 306 modifies the initial path to accordingly provide an updated path 512 for the second agricultural system 502. One example of a refinement or modification to the initial path conducted with the vehicle operating module 306 in Figures 3A, 3B is shown in Figure 5. As shown, the updated path 512 includes one or more deviations from the initial path 504 that generally follow the contour of the initial path 504. The deviations navigate the second agricultural system 502 around each of the field obstacles 506 (and indexed boundaries if present) while still maintaining guidance of the second agricultural system 502 toward the first agricultural system 501. As discussed herein, the updated path 512 is in one example a planned path based on the initial path 504 and the obstacles 506 identified and indexed with the scouting mission 500. In another example, the updated path 512 includes one more deviations from the initial path 504 that are based on the identified and indexed obstacles 506.

As shown in Figure 5, the field obstacles 506, in this example, are static. In other examples, the field obstacles 506 are dynamic, for instance, including but not limited to, vehicles such as the first agricultural system 501, other vehicles not shown in Figure 5 but shown in other figures herein, livestock, humans, water hazards, harvested crops that transition to harvested crops or zones or the like. In one example, the autonomous agricultural system controller 104 of the systems 300, 350 works in cooperation with the obstacle recognition module 310 to monitor dynamic obstacles and update their position and vectors (e.g., indexing) to facilitate real time or near real time modification of the initial path 504 to an updated path 512 as shown in Figure 5. Accordingly, the second agricultural system 502 is readily navigated around the field obstacles 506 even in circumstances where the field obstacles 506 are dynamic and move relative to one or more of the second agricultural system 502, the first agricultural system 501 and do so while the first and second agricultural systems 501, 502 are operating within a field.

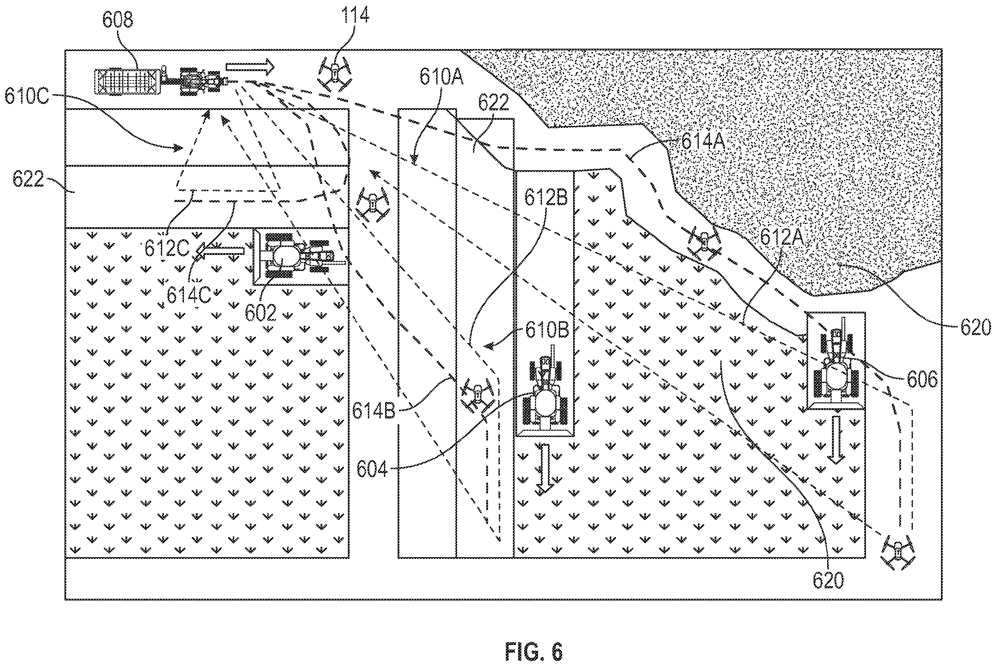

Figure 6 is a schematic example of a series of agricultural systems including first, second, third and fourth agricultural systems 602, 604, 606, 608 conducting operations within a field. As shown in Figure 6, a remote sensing device 114 as a component of one or more of the autonomous obstacle monitoring and vehicle control systems 300, 350 previously described and shown herein conducts one or more scouting missions 610A, 610B, 610C. Scouting missions direct the remote sensing device 114 along initial paths, for instance, of the fourth agricultural system 608 (in this example, a tractor having a grain cart implement) toward one or more of the first, second or third agricultural systems 602-606. As further shown in Figure 6, updated paths 614A-C are shown (in a heavier dashed line weight) for the fourth agricultural system 608 as it approaches each of the first, second and third agricultural systems 602, 604, 606. The updated paths 614A-C are generated through analysis of the initial path and the identification and indexing obstacles with the system 300 (or 350).

As previously discussed, Figure 6 shows one example of a field with a plurality of agricultural systems 602-608 therein. As also shown in Figure 6, the field includes a variety of obstacles such as field obstacles 620 including one or more bodies of water, the other agricultural systems 602-606. crops, harvest crop zones (an example of an absent obstacle) or the like. In this example, the unharvested fields correspond to obstacles 620 to accordingly minimize (e.g., reduce or eliminate) overrunning of unharvested crops, for instance, with the fourth agricultural system 608 as it is guided to each of the first, second and third agricultural systems 602, 604, 608. Other examples of field obstacles are shown in Figure 6. For instance, absent obstacle 622 is a harvested zone of the field that is available for travel of the agricultural systems. The absent obstacle 622 corresponds to a lack of an obstacle or removed (previous) obstacle. For instance, as shown in Figure 6, each of the first, second and third agricultural systems 602-606 include harvester combines. As the harvesters move through the field, the unharvested crop (obstacle 620) accordingly transitions to harvested crops (absent obstacle 622).

In one example, the remote sensing device 114 in combination with the remainder of the autonomous obstacle monitoring and vehicle control systems 300, 350 identifies and indexes obstacles along the routes 612A-612C. The identified and indexed obstacles include the field obstacles 620 such as unharvested crops, bodies of water, humans, livestock, fences or the like. Optionally, the identified and indexed obstacles include the absence of previously detected obstacles, for instances, absent obstacles 622. In another example, the absent obstacles 622 correspond to other field obstacles 620 that are now absent (e.g., because of harvesting), and as the remote sensing device 114 conducts mission operations the absence of the obstacle 620 initiates removal of the previous obstacle 620 from further monitoring (e.g., by the obstacle recognition module 310 or the vehicle operating module 306), and thereby ends the effect the now absent obstacle 620 would have with the vehicle operating module 306.

By monitoring the obstacles in the field including field obstacles 620 and optionally absent obstacles 622 (or initiating the removal of previous obstacles 620, such as now harvested crops) the remote sensing device 114 in combination with the rest of the system 300 (or 350) provides updated field information to the systems 300 for corresponding modification of the operation (e.g., driving, implement operation or the like) of one or more of the agricultural systems such as the fourth agricultural system 608. In the context of Figure 6, the updated identification and indexing of obstacles facilitates modification of the determined paths from the fourth agricultural system 608 to one or more locations of interest within the field including, for instance, the dynamically changing locations of the first through third agricultural systems 602-606.

In operation, the remote sensing device 114, such as a drone, is deployed from the fourth agricultural system 608 or one or more of the other component first, second or third agricultural systems 602, 604, 606, for instance, having a docking station such as the station 116 previously shown and described in Figure 1. Optionally, the remote sensing device 114 is deployed from a standalone docking station 116. In the example shown in Figure 6 the remote sensing device 114 is provided with the fourth agricultural system 608. As shown in Figure 6, a plurality of scouting missions 610A. 610B, 610C are provided for the remote sensing device 114, for instance, by way of the mission administration module 304 of the autonomous agricultural system controller 104 shown, for instance, in Figures 3A, 3B. The scouting missions 610A-610C include corresponding scouting routes 612A-612C. Scouting routes correspond, in one example, with determined (initial) paths, for instance, of the fourth agricultural system 608 extending from the agricultural system to one or more of the first, second or third agricultural system 602, 604, 606. As shown in Figure 6, the scouting routes 612A-612C are provided in dashed lines and show the approximate path of the remote sensing device 114 from its deployment at the fourth agricultural system 608 as it travels out to each of the first, second and third agricultural systems 602, 604, 606 and is then retrieved and docked at the fourth agricultural system 608.

The scouting missions conducted along the various scouting routes 612A-C allow the remote sensing device 114 to observe the area proximate to the determined path, for instance, along the determined path, adjacent to the determined path, within a specified distance relative to the determined path based on scanning ranges of the one or more sensors on the remote sensing device 114 or the like. The remote sensing device 114 then relays the observations to the remainder of the autonomous obstacle monitoring and vehicle control system 300, 350. Observations made by the remote sensing device 114 are interpreted by the obstacle recognition module 310 as discussed herein. The obstacle recognition module 310 including one or more of an obstacle comparator 312, identification module 314 and the like is configured to identify and index the locations of the identified obstacles provided along the scouting routes 612A-612C.

The identified and indexed obstacles including the field obstacles 620 (and optionally the absent obstacles 622) are provided in combination to a vehicle operating module 306 and accordingly the determined path (e.g., in one example a straight line from the system 608 to one or more of the other systems 602-606) is modified based on the intervening identified and indexed obstacles 620, 622 observed along each of the scouting routes 612A-612C. As shown in Figure 6, updated paths 614A, 614B, 614C are provided for the fourth agricultural system 608 to accordingly facilitate guidance by way of the vehicle operating module 306 to a location proximate to one or more of the first, second and third agricultural systems 602, 604, 606 to facilitate the offloading of harvested crops from the respective agricultural systems 602-606 to the fourth agricultural system 608. As shown in Figure 6, the remote sensing device 114 used in combination with the remainder of the autonomous obstacle monitoring and vehicle control system 300 (or 350) facilitates the updating of guidance of the fourth agricultural system 608, for instance, updating of a guidance line, guidance path or the like of the fourth agricultural system 608 by identification of field obstacles 620 (and updating the obstacles to account for harvesting or identifying absent obstacles 622) such as unharvested crops within one or more locations of the field. In another example, the system 300 (or 350) generates guidance from a relatively undefined initial path (e.g., a heading, straight line or the like) extending from the system 608 to a target location in the field, such as one or more of the systems 602-606. The undefined initial path is modified based on the obstacles 620 identified and indexed with observations conducted and analyzed with the system 300. Optionally, the agricultural systems 602, 604, 606 are also, in one example, observed with the remote sensing device 114 and identified and indexed (including tracking of movement based on vectors or additional observations) to accordingly provide an end location or a target location for the fourth agricultural system 608 and a corresponding undefined initial path for modification with the system 300.

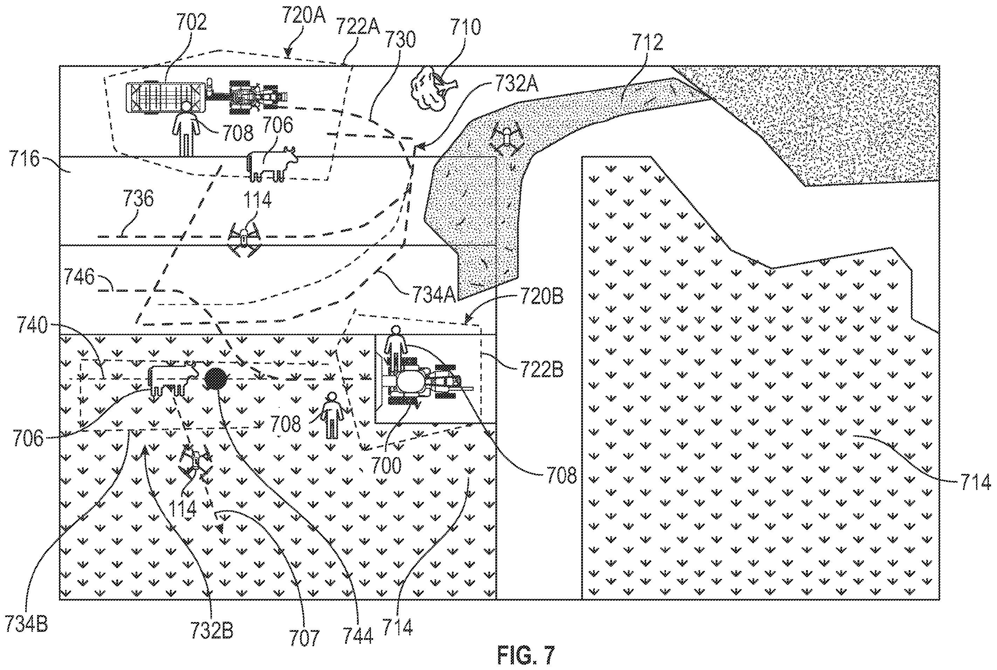

Figure 7 is a schematic example of a plurality of agricultural systems such as a first and second agricultural system 700, 702 conducting operations within a field having a variety of obstacles therein. As shown in Figure 7, the second agricultural system 702 in this example is a first agricultural vehicle in combination with an a grain cart implement. The first agricultural system 700 is a combine or harvester conducting harvester operations within the field. Figure 7 provides examples of inspection missions and scouting missions for each of the first and second agricultural systems 700, 702.

As shown in Figure 7, a variety of obstacles are present in the field including, but not limited to, field obstacles 706 such as livestock, field obstacles 708 such as humans or the like. Other field obstacles are present in Figure 7 including, but not limited to, field obstacle 710 such as a fallen tree. Another example of a field obstacle 712 is shown in Figure 7 and includes a washed out portion of a field, muddy terrain or the like for example saturated ground after heavy precipitation.

The unharvested crops are also examples of field obstacles 714 in Figure 7. As previously discussed with regard to Figure 6, the unharvested crops change over time, for instance because of harvesting with the system 700. In an example, the observations of the remote sensing device 114 update the identity and indexing of the unharvested crops (field obstacles 714) to represent 'opening' of the field in a manner that allows for updating or modification of initial paths for the systems 700, 702. In one example, the updated identity and indexing of the unharvested crops includes removing the previously identified and indexed obstacles 714 (including portions thereof) from monitoring with the system 300 (or 350) including the vehicle operation module 306.

In another example, harvested zones of the field are optionally identified and indexed as absent obstacles 716. In various examples, the absent obstacle 716 is identified and indexed in a similar manner to one or more of the other field obstacles previously described herein. For instance, the remote sensing device 114 observes the area proximate to one or more of a determined path or proximate to the agricultural systems 700, 702, and the obstacle recognition module 310 is configured to identify and index the absent obstacle 716 such as an area of harvested crops to facilitate operation or navigation of one or more of the agricultural system such as the second agricultural system 702 through the harvested portions of the field. Optionally, the absent obstacles 716 are interpreted by the system 300 as overwriting features in comparison to the previously present converse obstacles such as the field obstacles 714 (unharvested crops). The system 300, such as the vehicle operating module 306 or the obstacle recognition module 310, affirmatively initiates removal of the field obstacles 714 from further consideration by the system 300 based on the overwriting presence of the absent obstacle 716 (harvested crop zone) in a coincident indexed location to the previous field obstacle 714 (the unharvested crop).

As further shown in Figure 7, one or more different missions are conducted by the remote sensing device 114. For instance, relative to the second agricultural system 702, one or more of an inspection mission 720A and a scouting mission 732A are conducted proximate to the second agricultural system 702 or along a determined path 730 (proposed, initial or undefined path) of the second agricultural system 702. In one example, the determined path 730 is generated with the path module 302, field computer 352 and includes one or more of a planned path (e.g., guidance lines, swaths, turn segments or the like) as well as an 'undefined' path such as a general heading, direction or the like.

In a similar manner, one or more missions are conducted proximate to the first agricultural system 700. In one example, an inspection mission 720B is conducted proximate to the first agricultural system 700 to identify obstacles proximate to the first agricultural system 700. In another example, a scouting mission 732B. is conducted along a determined path 740 (proposed, initial or undefined path) of the first agricultural system 700, for instance, while conducting harvesting operations in the field.

Referring again to Figure 7, as previously described, the first agricultural system 700, in this example, includes a combine that conducts harvesting operations in the field. As shown, the first agricultural system 700 has already conducted plural passes through the field and accordingly one or more absent obstacles 716, are provided in the field. At the present location shown within the field, the first agricultural system 700 is in the process of conducting an inspection mission 720B with the remote sensing device 114. The remote sensing device 114 conducts the inspection of the first agricultural system 700 as well as the area proximate to the first agricultural system 700. During the inspection mission 720B, the remote sensing device 114 conducts the inspection along an example inspection route 722B proximate to the first agricultural system 700. In one example, the mission administration module 304 shown in Figures 3A, 3B provides the inspection mission 720B and the associated inspection route 722B to the remote sensing device 114. The remote sensing device 114 observes the first agricultural system 700 and the area proximate to the first agricultural system 700.

The obstacle recognition module 310 identifies and indexes one or more field obstacles including the field obstacles 708 (humans) in proximity to the first agricultural system 700. The obstacles 708 are indexed relative to the first agricultural system or another coordinate system to refine operation of the agricultural system 700 based on the obstacles and their locations. The obstacle recognition module 310 optionally assigns a priority to the identified field obstacles 708 based on one or more of the obstacle identity, indexing, proximity to a path or the system, confidence of the identification or the like. In this example, because the field obstacle 708 are humans, the obstacles are assigned a high priority and operation of the agricultural system 700 is modified to a halted operation thereby preventing operation of the first agricultural system 700.

As further shown in Figure 7, with respect to the first agricultural system 700, a scouting mission 732B and an associated scouting route 734B are also provided. The scouting mission 732B and associated scouting route 734B are provided by a mission administration module 304 of the autonomous agricultural system controller 104 shown in each of Figures 3A, 3B. The remote sensing device 114 moves along the scouting route 734B, for instance, corresponding to a determined path 740 (proposed, initial or undefined path) of the first agricultural system 700. In one example, the scouting route 734B corresponds to or is along a guidance line of the first agricultural system 700 provided, for instance, by a path module 302 or field computer 352 as shown in Figure 3B.

In a similar manner to the inspection mission 720B, the remote sensing device 114 observes the area proximate to the scouting route 734B while conducting the scouting mission 732B. The observations of the remote sensing device 114 are relayed to the obstacle recognition module 310 to identify and index observed obstacles. For instance, in this example, the field obstacle 708. such as the human provided in front of the first agricultural system 700, as well as the field obstacle 706 (livestock) are observed with the remote sensing device 114 and the obstacle recognition module 310 conducts one or more of identification, indexing or prioritizing of the obstacles 706, 708.

In one example, the obstacles 706, 708 are relayed to the vehicle operation module 306 and the determined path 740 is modified or updated to adjust control of the system 700 according to the obstacles. One or more of driving control, implement control or the like of the first agricultural system 700 is implemented to navigate the system 700 relative to the obstacles (or alternatively halt operation depending on proximity, priority or the like) while attempting to accomplish the agricultural operation (e.g., harvesting). For instance, in one example, with the field obstacle 706 (livestock) in front of the first agricultural system 700, a modified operation and halted operation are conducted with the first agricultural system 700. For instance, the first agricultural system 700 travels to a stop location 744 proximate to the field obstacle 706 and thereafter halts further travel. In one example, while in halted operation, the autonomous obstacle monitoring and vehicle control system 350 (or 300) sends an alert, for instance, through one or more of the user interface 308, field computer 352 or the like to request further interaction by way of an operator, remote operator or the like.

In another example, with the field obstacle 706 such as livestock having an obstacle vector 707 shown in Figure 7 extending away from the determined path 740 the first agricultural system 700 engages in modified operation. The vehicle operation module 306 receives the determined path 740 as well as the identified field obstacle 706 including its indexed obstacle vector 707 and conducts modified operation to guide the first agricultural system 700 along an updated path 746 as shown in Figure 7 that facilitates navigation around the field obstacle 706. In another example, with the obstacle vector 707 indicating the field obstacle 706 will not be within an intercepting location relative to the determined path 740 upon arrival of the system 700, the vehicle operation module 306 conducts normal operations and accordingly travels along the determined path 740 because the field obstacle 706 will be absent from its present location by the later time the first agricultural system 700 has arrived at that location.

As further shown in Figure 7, an inspection mission 720A and scouting mission 732A are conducted for the second agricultural system 702 with the remote sensing device 114. In the example inspection mission 728. the remote sensing device 114 travels in proximity to the second agricultural system 702, for instance, along an inspection route 722A. While conducting the inspection mission 720A the remote sensing device 114 observes the area proximate to the second agricultural system 702 and accordingly observes first and second field obstacles 706, 708 (in this example, livestock and a human). In another example, while conducting the inspection mission 720A, the remote sensing device also observes a third field obstacle 710. such as a fallen tree. In a similar manner to the previously described first agricultural system 700, while conducting this inspection mission 720A or at the termination of the inspection mission, the remote sensing device 114 relays its observations to the obstacle recognition module 310 for identification and indexing of the obstacle including one or more of identification of the obstacle, indexing (e.g., location, vector), or prioritizing.

The vehicle operation module 306 receives the obstacles (e.g., identities, indexing, priorities) and determines because of the proximity of the field obstacles 706, 708 that system operation including travel to a position adjacent to the moving first agricultural system 700 (for loading of grain) should be halted until the field obstacles 706, 708 are moved to avoid collision with the obstacles. In another example, a notification is provided by way of a user interface 308, field computer 352 or the like to an operator to facilitate operation intervention, for instance, including manual guidance around the field obstacles 706, 708.

As further shown in Figure 7, the remote sensing device 114 conducts a scouting mission 732A along a scouting route 734A. In one example, the scouting route 734A corresponds to or follows a determined path 730 of the second agricultural system 702, for instance, corresponding to a proposed path, initial path, undefined path (e.g., direction or heading) or the like such as the paths provided by one or more of the path module 302 of the autonomous agricultural system controller 104 shown in Figures 3A, 3B or the field computer 352 provided in Figure 3B. While traveling proximate to the scouting route 734A, the remote sensing device 114 observes the area proximate to and along the scouting route 734A.

In a similar manner to the other scouting missions and inspection missions described herein, the observations of the remote sensing device 114 are relayed to the obstacle recognition module 310 for one or more of identification, indexing or prioritizing of obstacles proximate to the scouting route 734A. For instance, the field obstacle 710 (fallen tree), field obstacle 712, such as a washed out or muddy portion of the field, are identified, indexed and prioritized. In another example, the first agricultural system 700 is another example of an obstacle that is observed with the remote sensing device 114. and identified, indexed or prioritized with the obstacle recognition module 310. The indexing of the first agricultural system 700 includes a vector in one example.

The obstacles are relayed to the vehicle operation module 306 of the autonomous agricultural system controller 104 to facilitate updating or modification of the determined path 730. For instance, as shown in Figure 7, an updated path 736 is implemented for the second agricultural system 702 to accordingly guide the second agricultural system 702 around each of the field obstacles 710, 712 as an example of modified operation. In another example, the first agricultural system 700 conducts its own modified operation, as shown with the updated path 746. The scouting mission 732A conducted with the remote sensing device 114 observes the system 700 as it travels along the updated path 746, and the system 700 (an obstacle in this example) including one or more of its indexed vector, path 746 or the like, is included in the analysis conducted with the vehicle operation module 306 of the second system 702 to modify the determined path 730 to the updated path 736 (e.g., to facilitate the grain loading from the system 700 along its updated path 746).

In another example, the position of the first agricultural system 700 as well as its updated path 746 or vector are relayed to the vehicle operation module 306 of the first agricultural system 700 without recognition by the obstacle recognition module 310. Instead, the first agricultural system 700 provides position and travel information to the second system 702 vehicle operation module 306 to use in combination with obstacles 706. 708, 710 otherwise observed and identified with the remote sensing device 114.

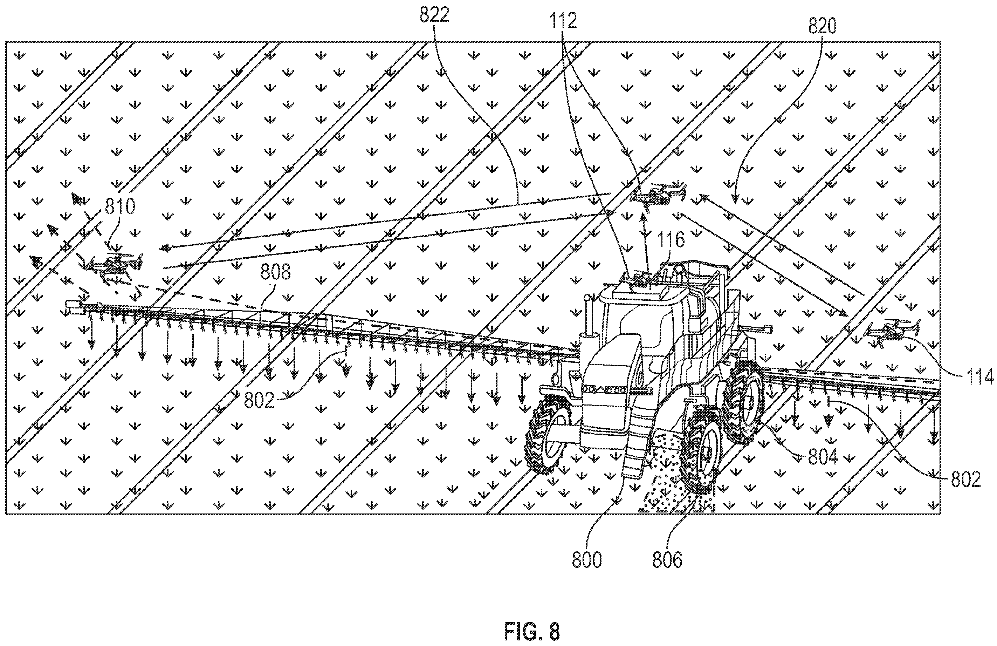

Figure 8 is an example of a diagnostic mission 820 conducted, for instance, with an agricultural system 800. In one example, the diagnostic mission 820 is conducted while the agricultural system 800 is conducting an agricultural operation in a field, for instance the mission is conducted while the agricultural system 800 is in operation and moving. As shown in Figure 8, the agricultural system 800. in this example, includes the vehicle as well as one or more implements such as sprayer booms extending from the remainder of the system 800. As shown with illustrative arrows, spray output is provided from the sprayer booms, for instance, to the underlying crops, soil or the like.

As further shown in Figure 8, a remote sensing device 114 (or 118) of a remote sensing system 112 is conducting the diagnostic mission 820. For example, the remote sensing device 114 conducts the diagnostic mission 820 along one or more diagnostic routes 822 extending around the system or directed to one or more locations proximate to the agricultural system 800. The remote sensing device 114 observes and facilitates the identification of potential diagnostic obstacles associated with the agricultural system 800. In various examples, diagnostic obstacles are shown in Figure 8 including, but not limited to, diagnostic obstacles 802, 804, 806. 808, 810. In operation, the remote sensing device 114 observes the agricultural system 800 from one or more directions to identify diagnostic obstacles. The remote sensing device 114 observes the agricultural system 800 and optionally the area proximate to the agricultural system to observe obstacles including, but not limited to, the diagnostic obstacles shown.

As previously discussed, the diagnostic mission 820 is, in one example, conducted while the agricultural system is in operation (e.g., moving, engaging in an operation) or while stationary. In other examples, the diagnostic mission 820 is conducted in an automatic fashion, for instance, on a specified interval including, but not limited to, every two or four hours of operation of the agricultural system 800. In other examples, the diagnostic mission 820 and corresponding operation of the remote sensing device 114 is conducted on an as-needed basis. For instance, upon an alert of a potential technical or operational issue with the agricultural system 800 the autonomous obstacle monitoring and vehicle control system 300, 350 initiates the diagnostic mission 820 and automatically deploys the remote sensing device 114 to conduct observations. In another example, an operator such as a remote operator triggers the initiation of the diagnostic mission 820. for instance, upon notification of a potential technical or operational error of the agricultural system 800. and conducting of the diagnostic mission 820 including identification and indexing of the obstacles is then carried out automatically.

As shown in Figure 8, a variety of example diagnostic obstacles 802-810 are illustrated. In one example, a diagnostic obstacle 802 includes an example blocked sprayer including, but not limited to, one or more of a partially blocked, fully blocked or skewed sprayer, for instance, having the spray pattern directed in an unspecified direction. Another example of diagnostic obstacle 804 includes a wheel issue, for instance, a punctured tire, bearing failure or forthcoming bearing failure or the like that affects the rotation of the ground engaging element such as a wheel. In one example, a diagnostic obstacle 804 including a bearing failure generates heat and one or more associated sensors provided with the remote sensing device 114, such as the thermographic sensors, are configured to detect elevated heat from the associated wheel or bearing. Optionally, the diagnostic obstacle 804 includes other components of the agricultural system 800 that potentially generate excess heat when failed or in the process of failing including, but not limited to, the engine, transmission, wheels or the like.

The diagnostic obstacle 806. also shown in Figure 8, provides another example of an obstacle including obstructions, debris engaged with one or more of the ground engaging elements or implements and prevents or frustrates operation of the agricultural system 800. The diagnostic obstacle 808 is another example of a potential obstacle including, but not limited to, evidence of a boom collision, damage to the boom, damage to an implement or the like. As shown with dashed lines for the obstacle 808 in Figure 8, the sprayer boom is, in one example, twisted or deflected, for instance, because of a collision with a fence, upstanding field obstacle such as a tree, rock or the like. In one example, the remote sensing device 114 is configured through an optical camera, video camera or the like to observe the deflected, bent or damaged implement and, as described herein, the obstacle recognition module 310 identifies the damaged implement as the diagnostic obstacle 808.

The diagnostic obstacle 810 shown in Figure 8 is another example of an obstacle observed while conducting the diagnostic mission 820. In this example, the spray pattern of agricultural product from one or more spray nozzles experiences drift and is carried away from a specified application direction. For instance, instead of applying the sprayer product in a downward direction, the sprayed agricultural product is instead carried by wind drift or the like away from the desired application area toward other fields, toward dissimilar crops or the like. In one example, the diagnostic obstacle 810 is observed with the remote sensing device 114, identified with the obstacle recognition module 310, and as described herein the vehicle operation module is configured to adjust the operation of the implement, for instance, by changing the spray droplet size to a larger droplet size that facilitates the specified (e.g., downward) application of the agricultural product while at the same time minimizing spray drifting.

In operation, the agricultural system 800 is conducting an agricultural operation, such as spraying, in a field. The remote sensing system 112 is operated to conduct the diagnostic mission 820. In one example, the diagnostic mission 820 is triggered or initiated based on a schedule, interval timing or the like configured to deploy the remote sensing device 114 in an automatic fashion, for instance, when a scheduled diagnostic mission is scheduled to occur. In another example, the diagnostic mission 820 is conducted on an as-needed basis. for instance, upon detection or indication that a technical or operational error has occurred with the agricultural system 800 (e.g., with one or more other diagnostic systems). In another example, one or more diagnostic indicators are relayed to an operator, such as a remote operator, and the operator then initiates the diagnostic mission 820.

The remote sensing device 114 is deployed according to the implemented diagnostic mission 820. Referring to Figures 3A and 3B, in one example, the diagnostic mission 820 is provided by a mission administration module 304, for instance, associated with the autonomous agricultural system controller 104. The mission administration module 304 includes a memory, database or the like containing various missions, associated mission routes, or the like. The mission administration module 304 initiates deployment of the remote sensing device 114, for instance, from a docking station 116 shown in Figure 8. As further shown in Figure 8, the diagnostic mission 820 includes a diagnostic route 822. The mission administration module 304 relays the diagnostic route 822 to the remote sensing device 114 to facilitate guidance of the remote sensing device 114 along the diagnostic route 822. In another example, the mission administration module 304 actively controls the remote sensing device 114 and actively guides the remote sensing device 114 along the diagnostic route 822.

As the remote sensing device 114 conducts the diagnostic mission 820, the one or more sensors associated with the remote sensing device 114 observe the agricultural system 800 and optionally the area proximate to the agricultural system 800 to assess one or more potential diagnostic obstacles. The observations of the remote sensing device 114 are relayed to the obstacle recognition module 310. for instance, a component of the autonomous obstacle monitoring and vehicle control system 300. 350 or a separate component in communication with the reminder of the system 300, 350.

As described herein, the obstacle recognition module 310 includes one or more submodules, circuits, processors, components or the like configured to identify obstacles and index obstacles from the observations made with the remote sensing device 114. For instance, one or more of the diagnostic obstacles 802-810 are identified by way of an obstacle comparator 312 configured to compare one or more observed characteristics of a potential obstacle with archived characteristics of archived obstacles. An identification module 314 identifies the obstacle based on the comparisons, for instance appending a designation (e.g., a name) to the obstacle corresponding to the comparison that generated the greatest confidence value of the identified obstacle 802, a blocked spray nozzle having a 90 percent confidence of identification (in contrast to lower confidence comparisons, such as spray drift with a 60 percent confidence). The indexing module 316 is configured to index one or more of the location, vector or the like of the obstacle. For instance, in one example, including one or more of the wheels, spray nozzles or the like, a location of the spray nozzle, a location of the respective wheel or the like is indexed to the identified obstacle. In another example, the prioritizing module 318 shown in Figures 3A, 3B assigns a priority to the identified obstacle, for instance, based on its identification, known severity of the obstacle (e.g., a failed or failing bearing is an example of a severe obstacle that could damage the system 800, cause a fire hazard or the like), indexing or the like. Optionally, the assigned priority initiates one or more tiered operations by way of the vehicle operation module 306 that potentially modify operation of the agricultural system 800 (e.g., normal operation, modified operation, halted operation or the like).

After identification of one or more obstacles, the identified obstacle (or obstacles) are relayed to the autonomous agricultural system controller 104 including the vehicle operation module 306. The vehicle operation module 306 based on the priority, identification, indexing or the like of the one or more diagnostic obstacles 802-810 is configured to control the operation of the agricultural system 800. For instance, one or more of driving control, implement control or the like are controlled (e.g., maintained, modified, modulated or the like) by way of the vehicle operation module 306 according to the identification of the various diagnostic obstacles. In one example where a diagnostic obstacle 808 has a relatively high priority including, but not limited to, a deflected or damaged sprayer boom the vehicle operation module 306 triggers a halted operation of the agricultural system 800 or optionally modified operation, for instance, to bring the agricultural system 800 to a garage, service center or the like for service.

In another example, with the diagnostic obstacle 810 including sprayer drift or the diagnostic obstacle 802. such as a fouled or partially blocked sprayer 802, one or more potential modified operations of the agricultural system 800 are initiated or conducted with the vehicle operation module 306. For instance, with the diagnostic obstacle 810 including sprayer drift the vehicle operation module 306 modifies the operation of the implement such as the sprayer boom to accordingly change the spray droplet size at the affected nozzles suffering from the spray drift diagnostic obstacle 810. The increased droplet sizes are less prone to sprayer drift and accordingly the diagnostic obstacle 810 is addressed with modified operation of the system 800 while continuing the agricultural operation (spraying). In another example with the diagnostic obstacle 802, such as the fouled spray nozzle, blocked spray nozzle or the like, the vehicle operation module 306 conducts modified operations, by compensating for the fouled or blocked spray nozzle with increased application rates through one or more unblocked or unfouled spray nozzles proximate to the blocked or fouled spray nozzle.

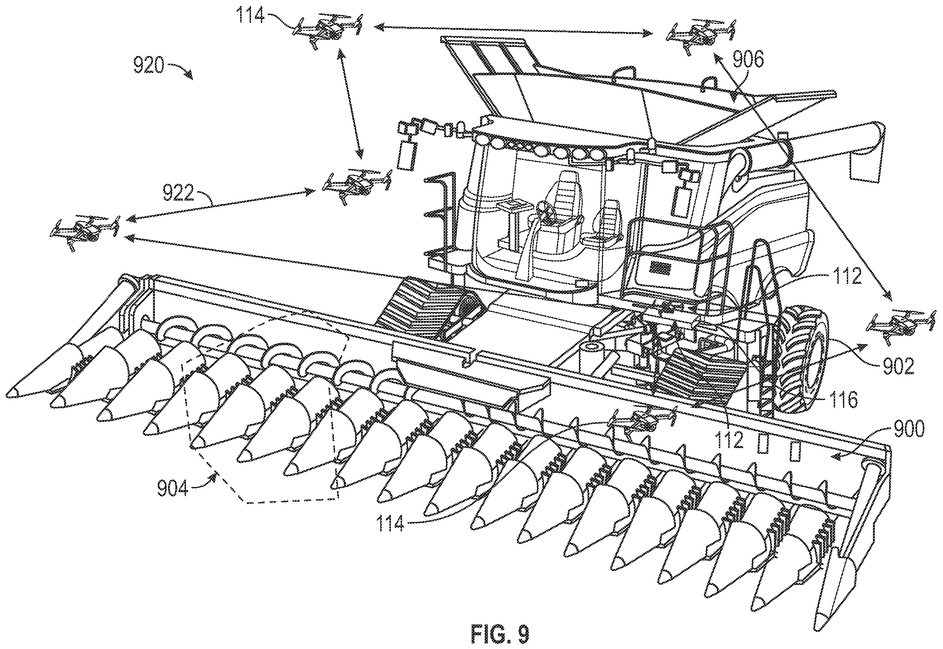

Figure 9 is another example of an agricultural system 900 in the process of being diagnosed according to a diagnostic mission 920 conducted with the remote sensing system 112 of the autonomous obstacle monitoring and vehicle control system 300 (or 35). The diagnostic mission 920 is, in one example, conducted while the agricultural system 900 such as a harvester, combine, other implement or vehicle or the like is stationary or conducting agricultural operations (e.g., harvesting operations).

As shown in Figure 9, a variety of different diagnostic obstacles such as diagnostic obstacles 902, 904 and 906 are proximate to the agricultural system 900. In one example, the diagnostic obstacle 902 includes a wheel or other ground engaging element issue such as a punctured tire, track failure, bearing failure or pre-failure or the like. As previously described, in one example, the remote sensing device 114 includes a thermographic sensor or other heat sensitive sensor configured to detect heat generated by one or more components of the agricultural system 200. In one example, where a bearing is failing or beginning to fail, heat generated at the ground engaging element is detected with the remote sensing device 114. In other examples, engine issues or other agricultural system component issues (e.g., conveyors or the like) generate heat and a remote sensing device 114 including one or more heat-based sensors observes these heat signatures and relays the observations to the obstacle recognition module 310 shown, for instance, in Figures 3A, 3B.

Another example of a diagnostic obstacle 904 is also shown in Figure 9. In this example, it is shown in dashed lines and is an obstruction, debris or the like engaged with the implement, such as the harvester head of the agricultural system 900. The diagnostic obstacle 904, in this example, prevents the reception of one or more crops or the like along the corresponding components of the implement and prevents or frustrates harvesting or damages crops as they are fed into the implement. In other examples, the diagnostic obstacle 904, such as debris, brush or the like, is trapped within the implement, trapped along the vehicle or the like and frustrates or aggravates operation of the agricultural system 900 including one or more of movement or implement operation and thereby slows operation in the field, increases the difficulty of turning, navigation or the like.

Another diagnostic obstacle 906 example is shown in Figure 9. In this example, the diagnostic obstacle 906 is associated with the grain bin, conveyor or the like configured to provide grain or harvested crops to the grain bin. The diagnostic obstacle 906 includes a full or partially full grain bin. The diagnostic obstacle 906 may, by way of the vehicle operation module 306 of the controller 104 (see Figures 3A, 3B) trigger one or more operational changes. For instance, the vehicle operation module 306 calls a different agricultural system, such as a grain cart and tractor to approach the agricultural system 900 to offload harvested crop from the grain bin. In another example, the diagnostic obstacle 906 includes a blocked or partially blocked conveyor, damaged conveyor, blocked or damaged auger or the like that prevents the delivery of harvested crop from the harvester head to the grain bin or from the grain bin to a grain cart.

In operation, the autonomous obstacle monitoring and vehicle control system 300, 350 shown in Figures 3A. 3B initiates a diagnostic mission, for instance, in an automatic fashion, according to a schedule or the like. In another example, the diagnostic mission is conducted on an as-needed basis, for instance, upon indication of one or more diagnostic issues, technical issues or operational issues of the agricultural system 900. In one example, the notification of these events automatically initiates the diagnostic mission 920. In another example, the notification is provided to an operator, such as a remote operator or onboard operator, with the agricultural system 900 and the operator then initiates the diagnostic mission 920.

As shown in Figure 9, the diagnostic mission 920, in this example, includes a diagnostic route 922 extending proximate to the agricultural system 900 and configured to observe the agricultural system 900 and optionally the area proximate to the agricultural system 900 including, for instance, the ground or field area in front of the implement of the system 900. Upon initiation of the diagnostic mission 920. the mission administration module 304 operates the remote sensing device 104 and guides the remote sensing device, for instance, along the diagnostic route 922. In another example, the diagnostic route 922 is relayed to the remote sensing device 114 and the remote sensing device 114 conducts the diagnostic mission with onboard control systems provided with the device 114.

As the remote sensing device 114 conducts the diagnostic mission 920, the one or more sensors of the remote sensing device 114 observe the agricultural system 900 and optionally the area proximate to the agricultural system 900. The observations are forwarded in real time (or upon docking of the remote sensing device 114 to a docking station 116) to the obstacle recognition module 310. As previously discussed in other examples, the obstacle recognition module 310 includes the obstacle comparator 312, identification module 314, indexing module 316 and prioritizing module 318 to identify and index one or more obstacles including the diagnostic obstacles 902. 904, 906 shown, for instance, in Figure 9.

Upon identification, including one or more of identification, indexing or prioritizing of obstacles, the identified obstacles are forwarded on to the vehicle operation module 306 of the autonomous agricultural system controller 104 shown in Figures 3A, 3B to control operation of the agricultural system 200. In various examples, control of the agricultural system 900 includes one or more of halted operation, normal operation or modified operation according to one or more of the identity, indexing or priority of the identified obstacles. For instance, in one example, a bearing failure or forthcoming bearing failure (diagnostic obstacle 902) is considered a higher priority diagnostic obstacle and accordingly the vehicle operation module 306, in one example, initiates a halted operation of the agricultural system 900 optionally with notification or calling for a service. In other examples, the diagnostic obstacle 902 has a lower priority, for instance, the bearing is in the process of failing but not yet failed (e.g., generates less heat than a failed bearing), a tire is punctured but not otherwise flat. The vehicle operation module 306 in such an example conducts a modified operation because of the lower priority of the obstacles 902. For instance, a swath of harvesting is completed followed by guidance of the agricultural system 900 to a service location, parked location or the like.

In another example, for instance, with the diagnostic obstacle 904 including an obstruction provided along the implement, the vehicle operation module 306 attempts to conduct a modified operation. Depending on the success or failure of the modified operation the vehicle operation module 306 (or obstacle recognition module) may raise the severity and corresponding priority of the diagnostic obstacle in a manner that triggers a secondary halted operation. In one example, the agricultural system 900 begins rearward movement according to modified operation provided with the module 306 in order to back the implement away from the obstruction. If upon repetition of the diagnostic mission 920 it is determined that the obstruction is no longer engaged with the implement, normal operation is resumed by the vehicle operation module 306. In another example, should the modified operation intended to remove the diagnostic obstacle 904 not succeed, for instance, debris remains lodged within the implement, the vehicle operation module 306 institutes a halted operation and optionally call for service to have the debris removed. In still other examples, the vehicle operation module 306 triggers an alternative form of modified operation including, for instance, guidance or navigation of the agricultural system 900 around the debris or other diagnostic obstacle 904 otherwise frustrating operation of the implement or frustrating travel of the system 900.

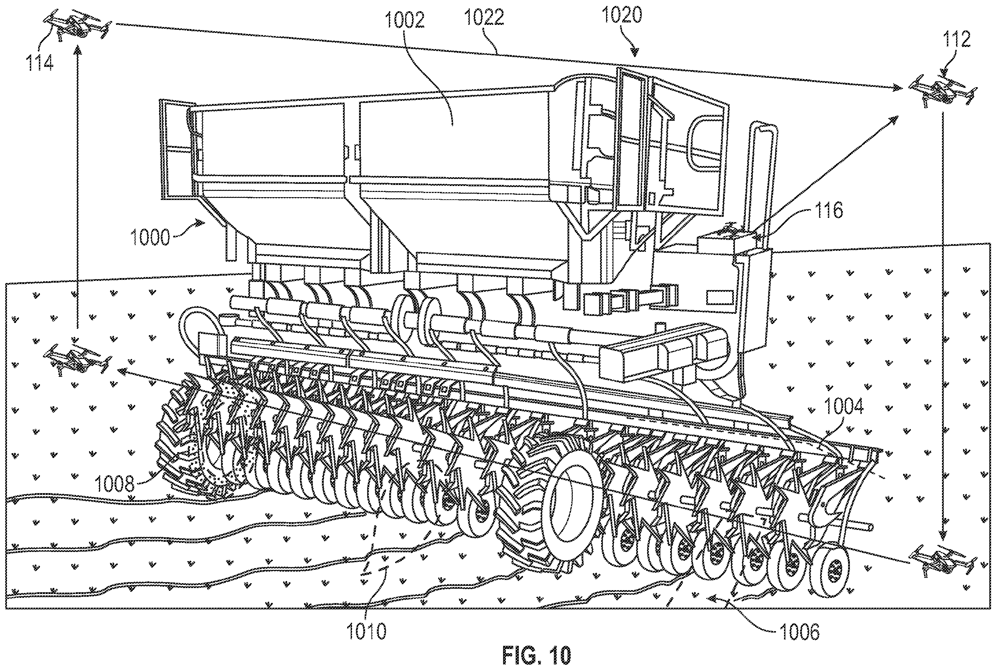

Figure 10 is another example of an agricultural system 1000 engaged in an agricultural operation in a field. In this example, the agricultural system 1000 includes a planter, seeder or the like, such as an automated planter configured to conduct automated planting operations without an operator. As shown, the agricultural system 1000 includes one or more example diagnostic obstacles 1002-1010. As further shown in Figure 10, the agricultural system 1000 includes a remote sensing system 112 having a remote sensing device 114, such as a drone, and a docking station 116 for the remote sensing device 114.

As shown in Figure 10, the agricultural system 1000 includes a variety of diagnostic obstacles. One example of a diagnostic obstacle 1002 includes an empty seed bin or near empty seed bin, clog in a hopper or the like. As discussed herein, the diagnostic obstacle 1002, when identified, prompts through the vehicle operation module 306 or other component of the controller 104 refilling of the seed bin, unclogging of a hopper or the like.

In another example, the diagnostic obstacle 1004 includes a damaged or misaligned agricultural implement. As shown in dashed line in Figure 10 the implement, such as a boom or arm including planter row units is deflected, for instance because of a collision. The damaged boom, planter row units or the like frustrate the operation of the agricultural system 1000 (e.g., by failing to plant, planting seeds outside of specified rows or the like).

Two other examples of diagnostic obstacles 1006, 1010 are also shown in Figure 10. The first example diagnostic obstacle 1006 includes, in one example, a row section issue with the agricultural system 1000. In one example, the planter or one or more planter row units are damaged, misaligned, fail to open a soil furrow for planting or the like. In another example, a diagnostic obstacle 1010 includes an obstruction, such as trapped debris or the like engaged with one or more components of the implement, for instance, along one or more of the planter row sections of the planter.

Another example of a diagnostic obstacle 1008 includes an issue with one or more of the ground engaging element similar to one or more of the previously described ground engaging elements (e.g., in Figures 8 or 9). The diagnostic obstacle 1008 includes, but is not limited to, a wheel issue such as a punctured tire, bearing failure or a failing bearing.

In operation, the autonomous obstacle monitoring and vehicle control system 300, 350 (e.g.. shown in Figures 3A, 3B) initiates the diagnostic mission such as the mission 1020 shown in Figure 10 based on one or more of a schedule or operator preference. In another example, the diagnostic mission 1020 is initiated based on one or more potential issues detected with one or more diagnostic systems associated with the agricultural system 1000 (e.g., failure to comply with one or more specified operations or thresholds of operation for the system 1000). As shown in Figure 10, upon initiation of the diagnostic mission 1020, the remote sensing device 114 follows the diagnostic route 1022. In one example, the mission administration module 304 actively controls the remote sensing device 114 and guides the device 114 along the diagnostic route 1022 (e.g., proximate to the agricultural system 1000, in a circuit around the agricultural system or the like). In another example, the mission administration module 304 relays the diagnostic route 1022 to the remote sensing device 114 and the device 114 guides itself around the agricultural system 1000 for observation of one or more diagnostic obstacles.

As the remote sensing device 114 conducts the diagnostic mission 1020, the one or more sensors of the remote sensing device 114 (or in another example the remote sensing device 118 shown in Figures 1 and 2B) observe the agricultural system 1000 and optionally the area proximate to the agricultural system 1000. The remote sensing device 114 relays observations to the obstacle recognition module 310 shown, for instance, in Figures 3A, 3B.

The obstacle recognition module 310 includes one or more of an obstacle comparator 312, identification module 314, indexing module 316 and prioritizing module 318 configured to analyze observations including, but not limited to, visual (image or video), ultrasound, radar, ground penetrating radar, LIDAR, infrared, thermographic, spectrometric. RGB (red-green-blue), hyperspectral, or chemical observations. The obstacle recognition module is configured to conduct one or more of identification, indexing or prioritizing of one or more of the diagnostic obstacles 1002, 1004, 1006, 1008, 1010.

As with previous examples, the identified obstacles are relayed to the autonomous agricultural system controller 104 including a vehicle operation module 306. Depending on one or more of the priority, identification or indexing of an identified diagnostic obstacle, the vehicle operational module 306 conducts operations including, but not limited to, halted operation, modified operation (e.g., to attempt to address the diagnostic issue, compensate for the issue, call for service while conducting additional agricultural operations or the like). Another operation mode implemented with the vehicle operation module 306 includes normal operation, for instance, if a diagnostic obstacle is considered noncritical, such as a partially empty seed bin. Optionally, even with normal operation the system 300 (or 350) calls for service to add additional seed to the hoppers or seed bins or schedules driving to a loading zone to add seed.

Other diagnostic obstacles such as the diagnostic obstacle 1004, 1006, 1008 or 1010 are, in some examples, given a higher priority and accordingly prompt halted operation of the agricultural system 1000 to facilitate service of the vehicle or modified operation to navigate the agricultural system 1000 to a service location to facilitate servicing of the one or more issues. In another example, the diagnostic obstacle 1010 such as an obstruction prompts modified operation, for instance, to back away from the obstruction and facilitate navigation of the agricultural system 1000 around the obstruction followed by continued normal operation, for instance, along an updated or modified path based on the original determined path while including navigation around the obstacle.

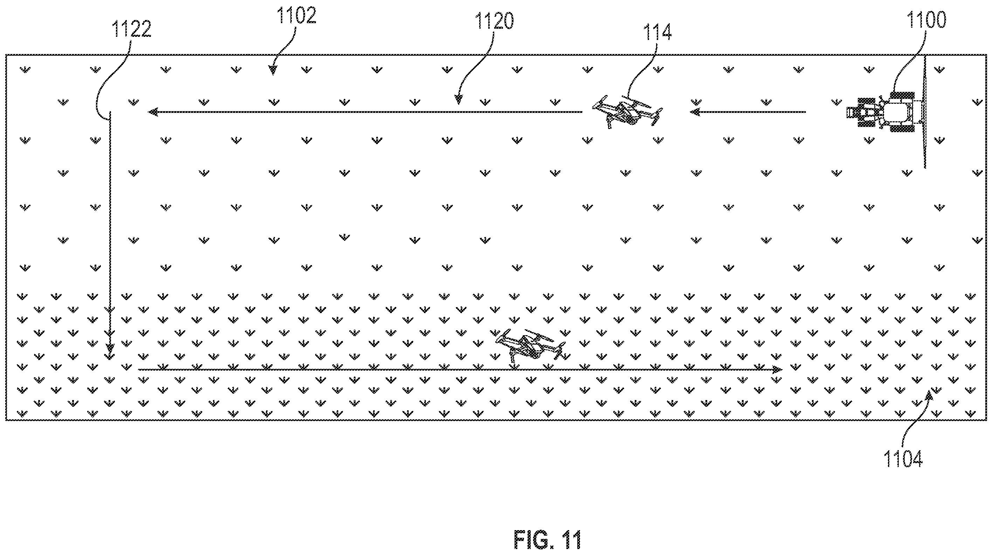

Figure 11 is a schematic view of another example of an agricultural system 1100 conducting an agricultural operation in a field. In this example, the agricultural system 1100 includes one or more of an agricultural sprayer, spreader, cultivator or the like configured to provide one or more husbandry operations to a field including one or more crops therein. As shown in Figure 11, crops are planted in a field and have grown with different densities (e.g., shown with density of the crop markings), for instance, corresponding to differences in one or more crop characteristics. As described herein, the crop characteristics are another example of an obstacle observable with one or more of the sensors associated with a remote sensing device 114 and identified with the obstacle recognition module 310.

As further shown in Figure 11, another example of a scouting mission 1120 is provide with the remote sensing device 114. In this example, the remote sensing device 114 receives the scouting mission 1120 or is actively controlled during the scouting mission, for instance, with the mission administration module such as the module 304 of the autonomous agricultural system controller 104 shown in Figures 3A, 3B. In this example, the scouting mission 1120 includes a scouting route 1122 configured to guide movement of the remote sensing device 114 along the scouting route 1122. In one example, the scouting route 1122 includes, but is not limited to, one or more of guidance lines, turn segments or the like planned for the agricultural system 1100 as it conducts the agricultural operation in the field. For example, the scouting route 1122 generally follows a route corresponding to the planned travel of the agricultural system 1 100 as it operates in the field.

One or more example obstacles 1102, 1104 are shown in figure 11 corresponding to variations in crops, crop characteristics or the like. That is to say, in one example, the one or more crop characteristics 1102, 1104 are obstacles that are, in various examples, capable of one or more of identification, indexing or prioritization as previously described with regard to other obstacles herein. In this example, the crop characteristics 1102, 1104 (examples of obstacles) are used to facilitate enhanced husbandry such as spraying, spreading of agricultural products, cultivating, watering or the like, for instance, with the agricultural system 1100.

In one example, the first and second obstacles 1102 (e.g., crop characteristic) corresponds to nitrogen content or another crop characteristic associated with the crops that are an indication of crop health. In another example, the first and second obstacle 1102, 1104 correspond to water content in the crop, in the soil or one or more other characteristics associated with the crop or the underlying soil. In yet another example, the first and second obstacles 1102, 1104 corresponds to other crop characteristics including foliage or canopy density, foliage or canopy color, crop height or the like.

In one example, the first and second obstacles 1102, 1104 correspond with variations in nitrogen content that are identified as distinct obstacles, related obstacles having different values or the like. As described herein, the obstacle recognition module 310 is configured to identify the first and second obstacles 1102, 1104 (in this example nitrogen content levels) and index the obstacles to locations in the field.

In one example, the remote sensing device 114 such as a drone, articulable arm or the like includes one or more sensors including, but not limited to, a normalized difference vegetation index camera (NDVI) that calculates visible and near-infrared light reflected by vegetation, a multi-spectral camera or hyper-spectral camera configured to sense the difference in nitrogen content or other crop characteristics, for instance, through one or more differentiation of colors, differentiation of electromagnetic waves (outside of visible light), or the like. In this example, the upper portion of the field, for instance, corresponding to the first obstacle 1102 having less dense crop coverage indicates a lower concentration of nitrogen content therein while the lower portion corresponding to the second obstacle 1104 has a higher crop density and, in this example, a higher nitrogen content.

The obstacles 1102, 1104, in this example, correspond to variations in crop characteristics and are identified and indexed with the obstacle recognition module 310. The identified obstacles 1102, 1104 are relayed to the vehicle operation module 306 to control the application of one or more agricultural products to the zones of the field with the obstacles 1102, 1104 (variations in one or more characteristics). For instance, in the zone of the field having a higher nitrogen content corresponding to the second obstacle 1104 the vehicle operation module 306 initiates the application of a lesser quantity or concentration of agricultural product from one or more sprayer nozzles, spreaders or the like overlying the portion of the field with the second obstacle 1104. Conversely, the first obstacle 1102, corresponding to a lower nitrogen content in that portion of the field, prompts the vehicle operation module 306 to increase the quantity or concentration of agricultural product applied through spray nozzles, spreaders or the like overlying the portion of the field with the first obstacle 1102.

In operation, the remote sensing device 114 is deployed to conduct the scouting mission 1120. for instance, according to a scouting route 1122 provided by the mission administration module 304 shown in Figures 3A, 3B. The remote sensing device 114 moves proximate to the scouting route 1122 and observes the area proximate to the scouting route 1122 to analyze one or more crop or soil characteristics. In one example, the scouting route 1122 corresponds to one or more of guidance lines, swath lines, turn segments for the agricultural system 1100 provided by way of the path module 302 or the field computer 352 shown in Figure 3B. The remote sensing device 114 observes the proximate area with one or more sensors and observes characteristics associated with crops, soil or the like and relays the information to the remainder of the autonomous obstacle monitoring and vehicle control system 300, 350 shown in Figures 3A, 3B.

The observations of the remote sensing device 114 are interpreted with the obstacle recognition module 310 including, but not limited to, the obstacle comparator 312, identification module 314, the indexing module 316 and the prioritizing module 318. In one example, the obstacle comparator 312 compares one or more archived characteristics, for instance, nitrogen content, water content, foliage density or color, crop height, reflectivity of visible and near-infrared light or other crop characteristics or the like with the observations made with the remote sensing device 114. Through this comparison, one or more of the first or second obstacles 1102, 1104 (and potentially graduated versions of the obstacles corresponding to varying characteristic levels) are identified and indexed to the corresponding portions of the field. For instance, as shown in Figure 11, in one example, the field is annotated with stippling, crop symbols or the representing crop characteristics as obstacles 1102, 1104.

The identified and indexed obstacles, in this example the crop characteristics 1102, 1104, are relayed to one or more other components of the systems 300, 350 including, for instance, the vehicle operation module 306 of the autonomous agricultural system controller 104. The vehicle operation module 306 controls operation of the agricultural system 1100, including one or more implements associated with the agricultural system 1100. For instance, the agricultural system 1100 including an agricultural sprayer includes one or more sprayer booms extending from the vehicle and having a plurality of sprayer nozzles there along. In one example, the vehicle operation module 306 controls operation such as the concentration of agricultural product, volume of agricultural product or the like applied through associated sprayer nozzles overlying portions of the field having the identified and indexed obstacles 1102 or 1104. For instance, for sprayer nozzles traveling over the portion of the field having the identified and indexed obstacle 1102 and corresponding to a lower nitrogen content, a higher volume or concentration of the agricultural product such as a fertilizer is applied through the overlying spray nozzles. Conversely, the sprayer nozzles traveling over the portions of the field having the second crop characteristic 1104 corresponding to a higher nitrogen content apply a lower concentration or quantity of the agricultural product based on control provided with the vehicle operation module 306.

In still other examples, the obstacles 1102, 1104 correspond to water content, density of crop foliage, crop height, indicators of crop health, composite crop characteristics based observations from multiple sensor types or the like. The agricultural system 1100, for instance, including the autonomous obstacle monitoring vehicle control system 300 (or 350) is configured to control the operation of the associated implement according identified obstacles and the associated crop or soil characteristics.

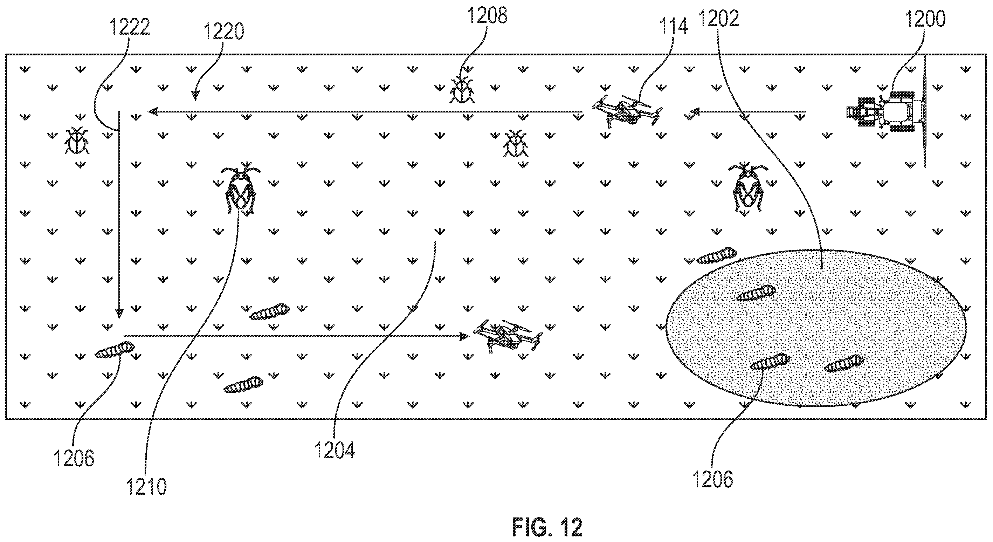

Figure 12 is another example of an agricultural system 1200, in this example, a sprayer, cultivator, spreader or the like operating within a field. In this example, the various diagnostic obstacles 1202-1210 include one or more obstacles such as weeds, weed densities, pests, associated damage caused by pests or the like. For instance, as shown in Figure 12, the diagnostic obstacle 1202 is a zone in the field having observed weeds or a greater weed density relative to the remainder of the field. In contrast, the diagnostic obstacle 1204 has a fewer observed weeds or a lesser weed density than the diagnostic obstacle 1202 (the zone of the field corresponding to 1202).

As further shown in Figure 12. a plurality of pests or pest associated damage is illustrated and represented with the diagnostic obstacles 1206, 1208, 1210. In one example, the diagnostic obstacle 1206 corresponds to a pest (e.g., a worm) or damage caused by the associated pest to crops. For instance, the remote sensing device 114 includes one or more sensors such as an optical camera, video camera or the like configured to observe the pest directly. In another example, the remote sensing device 114 includes one or more sensors that observe damage associated with the pest. Additional diagnostic obstacles 1208, 1210 correspond to different pests or crop damage associated with the respective pests. In each of these examples, the remote sensing device 114 includes sensors configured to observe one or more of pests, pest damage. weeds, weed densities or the like and relay the observed area including these associated obstacles 1202-1210 to the obstacle recognition module 310 previously described and shown herein as part of the systems 300 or 350.

In an example, the agricultural system 1200 such as a sprayer, spreader or the like carries one or more agricultural products such as herbicides, pesticides or the like that are administered from spray nozzles, spreading wheels or the like. These implements are controlled based on identification and indexing of the diagnostic obstacles 1202-1210 including, but not limited to, weeds, pests or the like (as a type of obstacle). The obstacle recognition module 310 and the vehicle operation module 306 of the systems 300 or 350 control the operation of the various implements to treat these diagnostic obstacles.

For instance, in the portion of the field having the diagnostic obstacle 1204 corresponding to a lower weed density (relative to the zone having the diagnostic obstacle 1202), a lower concentration, flow rate of agricultural product or quantity of granular product is applied. Conversely, in the portions of the field having the identified and indexed diagnostic obstacle 1202 a relatively higher concentration, flow rate of agricultural product or quantity of granular agricultural product is applied. Control of application is conducted by the vehicle operation module 306 based on the identified obstacles 1202, 1204. Accordingly, as the agricultural system 1200 or one or more applicators (e.g., spray nozzles, spreader wheels, or the like) enter zones indexed with the obstacles 1202, 1204 the vehicle operation module 306 controls operation of the applicators based on the obstacles. In one example, the concentration or flow rate of a liquid agricultural product is increased by a specified quantity such as 10 percent or more to increase the mortality rate for the identified weed, pests, higher identified density of the same or the like (e.g., 1202 in contrast to 1204). In another example, the identification and indexing of weeds or density of weeds as the diagnostic obstacles 1202, 1204 is relayed to the vehicle operation module 306 of a cultivator. The vehicle operation module 306 selectively operates the cultivator shovels depending on their locations within the zones corresponding to the diagnostic obstacles 1202, 1204. For instance, in the zone of the diagnostic obstacle 1202 with higher weed density the vehicle operation module 306 operates the cultivator shovels more aggressively (e.g., by cultivating over greater lengths, in close proximity to crop rows or the like).

In another example, the obstacle recognition module 310 is configured to identify and index pests, damage caused by pests, weeds, weed density or the like as the obstacles 1202, 1204. 1206, 1208, 1210 and discriminate between various pests, weeds, associated damage or the like. Archived characteristics for varied pests, weeds, damage caused to crops by pests or the like are included with or available to the obstacle recognition module 310 to directly or indirectly identify and index pests or weeds for instance, by shape of pests or weeds, color of pests or weeds, shape or color of damage to crops or the like. The obstacle recognition module 310 including the obstacle comparator 312, identification module 314 or the like are configured to compare the archived characteristics with associated characteristics observed with the remote sensing device 114.

The refined identification of obstacles (based on pest type, weed type or the like) facilitates varied husbandry. For instance, the vehicle operation module 306 is configured to modulate the agricultural product composition based on the identified obstacles. In one example, the vehicle operation module 306 prescribes a first composition of agricultural product (e.g., concentration, constituents or the like) to address a first diagnostic obstacle (e.g., pest type, weed type or the like) and prescribes a second composition of agricultural product different from the first to address a second diagnostic obstacle corresponding a different pest, weed or the like. Variation in husbandry control is available for a spreader or cultivator (e.g., moving the shovels to different depths for different weed) with the systems 300, 350 described herein.

In another example, the remote sensing device 114 and obstacle recognition module 310 identify and index other plants, for instance, a different crop in a proximate zone of a field, such as wheat in a zone adjacent to corn. The proximate crop is identified as an obstacle, and the vehicle operation module 306 arrests application of an agricultural product such as a pesticide, herbicide or the like that is potentially harmful to the adjacent crop. In this example, the adjacent crop is identified as a diagnostic obstacle relative to the treatment provided by the agricultural system 1200, and accordingly the vehicle operation module 306 ceases application of the product until the agricultural system 1200 (or one or more of its applicators) is outside of the zone of the adjacent crop.

In still other examples, the autonomous obstacle monitoring and vehicle control system 300, 350 when with or without the appropriate agricultural product, implement or the like optionally is configured to index obstacles (e.g., 1202-1210) or provide an alert with the indexed obstacles that is delivered to a user or logged for eventual review by a user that indicates the identified and indexed weed, pest or the like including the location within the field. At a future time, an agricultural system having the associated agricultural product, implement or the like configured to address one or more of the identified pest, weed or the like is readily dispatched to address the diagnostic obstacle 1202-1210. For instance, as the agricultural system arrives at the location of the previously identified and indexed obstacle 1202-1210 the appropriate husbandry operation is automatically conducted (e.g., with one of the systems 300, 350 having a vehicle operation module 306.

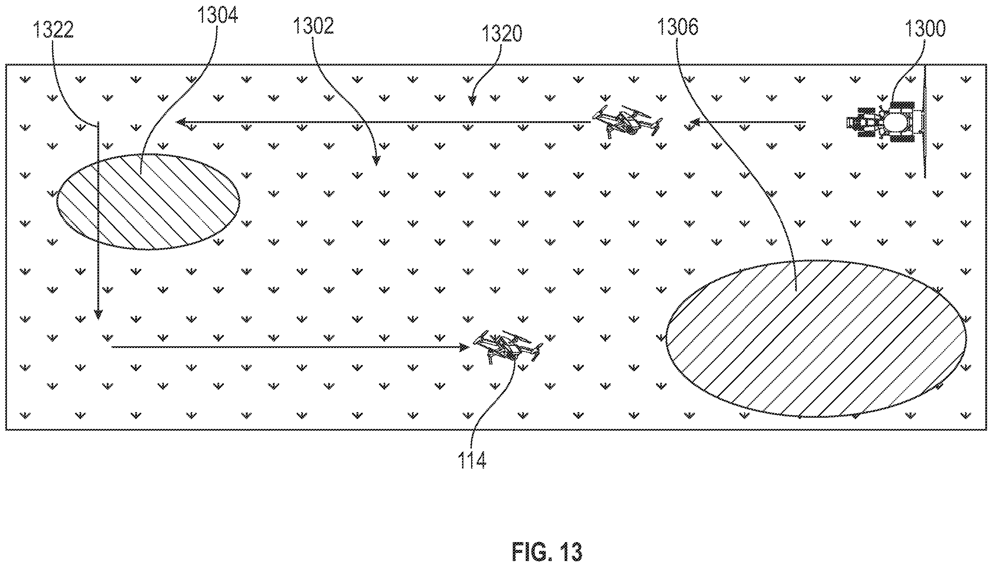

Figure 13 is another example of an agricultural system 1300 having a sprayer, cultivator, spreader implement or the like for conducting an agricultural operation within a field. In this example, a remote sensing device 114 such as a drone or the like conducts a scouting mission 1320 along a scouting route 1322. A variety of diagnostic obstacles 1302, 1304, 1306 are shown in the field. One example diagnostic obstacle 1302 corresponds to a soil characteristic or soil type. Variations in the soil characteristic or soil type are reflected by the diagnostic obstacles 1304, 1306. In an example, the remote sensing device 114 includes one or more sensors configured to detect variations in the soil or soil characteristics and accordingly facilitate identification and indexing of soil type, soil characteristics or the like as corresponding diagnostic obstacles 1302, 1304, 1306. In one example, the remote sensing device 114 includes a hyper-spectral, multi-spectral camera or the like configured to detect types of soils including different characteristics of soil, different compositions of soil or the like.

The obstacle recognition module 310, for instance, of the systems 300, 350 described herein identifies and indexes the soils observed with the remote sensing device 114. In one example, the obstacle recognition module 310 identifies and indexes zones in the field having varying alkalinities corresponding to the obstacles 1302, 1304, 1306 (with 1306 having the greatest alkalinity). In one example, the agricultural system 1300 includes the vehicle operating module 306, and controls the application rate of lime or another soil husbandry product based on the identified and indexed obstacles (alkalinities) in the field. For instance, in a portion of the field having the diagnostic obstacle 1306 corresponding to a relatively high alkalinity, a higher quantity of lime is applied. In the second zone, corresponding to the diagnostic obstacle 1304, a lower alkalinity (but greater than obstacle 1302) is identified and a moderate or lesser quantity of lime is applied with the system 1300. Conversely, in the portion of the field having the diagnostic obstacle 1302 corresponding to a relatively low alkalinity, a small quantity or zero quantity of lime is applied, for instance, with the agricultural system 1300 (e.g., a spreader).

In a similar manner, soil identification and indexing as described herein are conducted to assess nitrogen content in the soil to control fertilizer application, for instance, with a sprayer, cultivator or the like. In other examples, soil characteristics are identified and indexed with sensors associated with the remote sensing device 114 (or 118) and the obstacle recognition module 310 to differentiate between sandy, clay, black (good) top soil or the like to facilitate control of the agricultural system 1300 or a forthcoming agricultural system for independent and discrete husbandry of the field and differentiated zones of the field, for instance, corresponding to the diagnostic obstacles 1302, 1304, 1306.

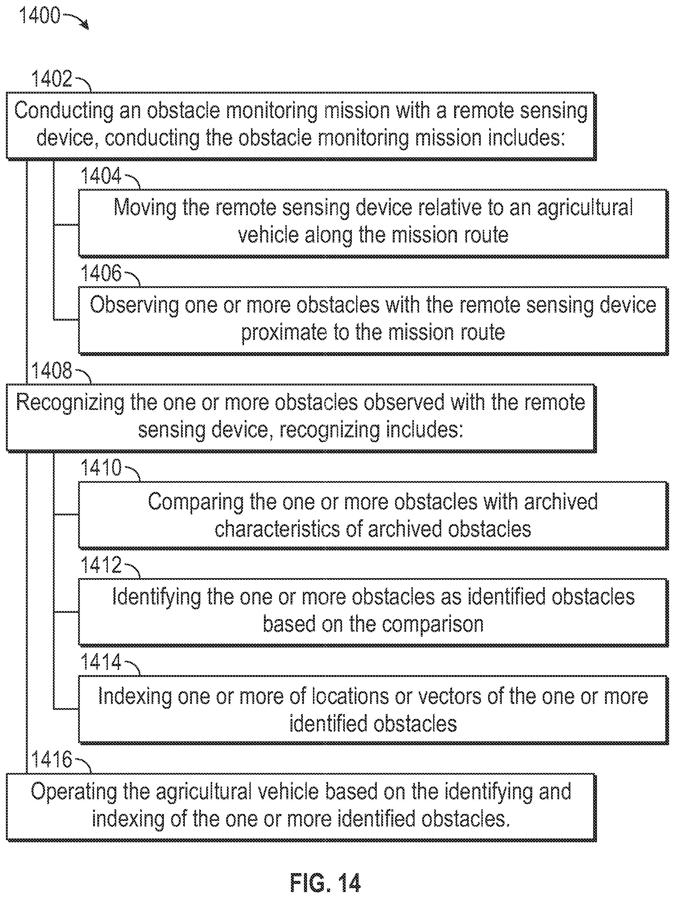

Figure 14 is a block diagram showing one example of a method 1400 for autonomous obstacle monitoring and vehicle control, for instance with a remote sensing device as described herein. In describing the method 1400 reference is made to one or more components, features, functions or the like described herein. Where convenient reference is made to the components or features with reference numerals. Reference numerals provided are exemplary and are not exclusive. For instance, the features, components, functions or the like described in the method 1400 include but are not limited to the corresponding numbered elements, other corresponding features described herein, both numbered and unnumbered as well as their equivalents.

At 1402 an obstacle monitoring mission is conducted with a remote sensing device, for instance the remote sensing device 114 or 118 shown in Figures 2A, 2B. Conducting the obstacle monitoring mission includes at 1404 moving the remote sensing device relative to an agricultural vehicle along a mission route. Conducting includes at 1406 observing one or more obstacles (e.g., diagnostic obstacles, field obstacles or the like) with the remote sensing device along or proximate to the mission route.

At 1408 the method 1400 includes recognizing the one or more obstacles observed with the remote sensing device. Recognizing includes 1410 comparing the one or more obstacles with archived characteristics of archived obstacles. For example, with an image of the detected obstacle pixels, arrays of pixels, coloring or the like are compared with archived characteristics. At 1412. the one or more obstacles are identified based on the comparison between the obstacles and archived characteristics of archived obstacles. Optionally, at 1414 the method 1400 includes indexing one or more of locations or vectors of the one or more identified obstacles. For instance, a static obstacle (e.g., such as its virtual representation or indication) is indexed on field map, with coordinates relative to a coordinate system or coordinate system origin or the like. In another example, an obstacle (e.g., representation or indication) is indexed with a vector, for instance extending from its present location and having magnitude and directly corresponding to velocity, acceleration or the like.

At 1416 the agricultural vehicle is operated based on the identifying and indexing of the one or more identified obstacles. For example, an obstacle within a planned path or proximate to the path of the vehicle prompts at least one of navigation modification around the obstacle (modified operation), halted operation of the vehicle (e.g.. if the obstacle is impassable or has a sufficiently high priority that triggers halting), or normal operation (e.g., if the obstacle has a low priority, is passable by an overhead sprayer boom or the like). In another example, an identified obstacle including a diagnostic obstacle prompts operation of the agricultural vehicle in a manner based on identifying of the identified obstacle. For instance, a faulty bearing (e.g., having a detectable thermal characteristic at the vehicle wheel) is considered a diagnostic obstacle that may trigger halted operation or modified operation (e.g., immediate return to a base location for service). In one example, a greater thermal signature prompts halted operation while a comparatively lesser thermal signature (corresponding to failing as opposed to failed bearing) prompts modified operation such as decreased operating speeds, finishing of a field zone and return to a maintenance location or the like.

Several options for the method 1400 follow. In one example, the method 1400 includes selecting an obstacle monitoring mission from a mission database including a plurality of missions and respective mission routes. For instance, the plurality of missions and respective mission routes include an inspection mission having an inspection route proximate to the agricultural vehicle (e.g., around the vehicle, to view one or more components necessary for an operation or the like). A scout mission is another example missing having a scouting route along a determined path (including predetermined, or real time determined path) of the agricultural vehicle. For instance, the remote sensing device observes the field along the determined path, and identifies and indexes forthcoming obstacles (unharvested crops, livestock, humans, fallen trees, water or the like), absence of obstacles (harvested and 'open' field or the like) to facilitate operation of the agricultural vehicle including autonomous driving and implement operations. A diagnostic mission is another example mission having a diagnostic route proximate to the agricultural vehicle. Optionally, the remote sensing device is deployed and operated proximate to the agricultural vehicle to assess one or more potential issues with the vehicle including the implement or the vehicle itself. For instance, one or more of the vehicle components are diagnosed as running outside of specified parameters (including failing to run), and the autonomous obstacle monitoring and vehicle control system described herein deploys the remote sensing device to observe the vehicle component, and the system identifies the component through comparison with archived characteristics of the obstacle (e.g., in this example an archived component) and facilitates identification of an issue with the component for instance with comparison of the component, such as its heat signature, accumulated debris around the component or the like. The diagnostic mission is optionally conducted while the vehicle is stationary, conducting operations in a field or traveling between a field and a starting location (e.g., maintenance site, garage or the like).

In another example, the method 1400 includes a path module configured to determine a path of travel for the agricultural vehicle. For instance, the path module determines a proposed path for the agricultural vehicle. The proposed path is modified to an updated path based on the identification and indexing of the one or more identified obstacles.

In yet another example, identifying the one or more obstacles as identified obstacles includes one or both of identifying field obstacles or identifying diagnostic obstacles. In one example, identifying the one or more obstacles as identified (field) obstacles includes identifying one or more of debris, field washouts, sink holes, water, saturated ground, humans, livestock, animals, fences, damaged fences, open gates, fallen trees, accumulated brush, harvested crops, unharvested crops, vehicles or rocks. In another example, identifying the one or more obstacles as identified (diagnostic) obstacles includes identifying a full grain bin, failed component, failing component, damaged component, trapped debris, failed implement, failing implement, damaged implement, fouled spray nozzle, or agricultural product drift.

Optionally, operating the agricultural vehicle based on the identification and indexing of the one or more identified obstacles includes prioritizing the one or more identified obstacles based on one or more of the identifying or indexing. For instance, an identified human is in one example prioritized higher than livestock or a water or mud zone. In another example, an identified vehicle that is indexed with a vector extending away from the vector (path) of the agricultural vehicle is prioritized lower than an identified vehicle having a vector intersecting with the vector of the agricultural vehicle. Operating the agricultural vehicle includes autonomously controlling the agricultural vehicle based on the prioritizing of the one or more identified obstacles.

In another example, prioritizing includes associating one of a halt operation, modified operation or normal operation indication with the identified obstacles based on one or more of the identifying or indexing. Optionally, autonomously controlling the agricultural vehicle based on the prioritizing (discussed herein) includes halting operation for a halt operation indication, modifying operation for a modified operation indication or conducting normal operation with the agricultural vehicle for a normal operation indication.

In still another example the method 1400 includes repeating recognizing of the one or more obstacles, and repeating operating the agricultural vehicle based on the repeated identifying and indexing of the one or more identified obstacles. Optionally, repeated recognition includes updated identification and indexing of obstacles to facilitate operation of the agricultural vehicle with the updated identified and indexed obstacles. For example, obstacle identification and indexing are refined to facilitate refined operation of the agricultural vehicle (e.g., with enhances obstacle identification, indexing or the like).

As discussed herein, the remote sensing device includes a drone in one example, and conducting the obstacle monitoring mission with the remote sensing device includes deploying the drone from a docking station for moving along the mission route and observing the one or more obstacles.

### Various Notes

The above description includes references to the accompanying drawings, which form a part of the detailed description. The drawings show, by way of illustration, specific embodiments in which the invention according to the appended claims can be practiced. These embodiments are also referred to herein as "examples." Such examples can include elements in addition to those shown or described. However, the present inventors also contemplate examples in which only those elements shown or described are provided.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In this document, the terms "including" and "in which" are used as the plain-English equivalents of the respective terms "comprising" and "wherein." Also, in the following claims, the terms "including" and "comprising" are open-ended, that is, a system, device, article, composition, formulation, or process that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects.

Geometric terms, such as "parallel", "perpendicular", "round", or "square", are not intended to require absolute mathematical precision, unless the context indicates otherwise. Instead, such geometric terms allow for variations due to manufacturing or equivalent functions. For example, if an element is described as "round" or "generally round," a component that is not precisely circular (e.g., one that is slightly oblong or is a many-sided polygon) is still encompassed by this description.

Method examples described herein can be machine or computer-implemented at least in part. Some examples can include a computer-readable medium or machine-readable medium encoded with instructions operable to configure an electronic device to perform methods as described in the above examples. An implementation of such methods can include code, such as microcode, assembly language code, a higher-level language code, or the like. Such code can include computer readable instructions for performing various methods. The code may form portions of computer program products. Further, in an example, the code can be tangibly stored on one or more volatile, non-transitory, or non-volatile tangible computer-readable media, such as during execution or at other times. Examples of these tangible computer-readable media can include, but are not limited to, hard disks, removable magnetic disks, removable optical disks (e.g., compact disks and digital video disks), magnetic cassettes, memory cards or sticks, random access memories (RAMs), read only memories (ROMs), and the like.

The above description is intended to be illustrative, and not restrictive. The Abstract is provided to comply with 37 C.F.R. §1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed embodiment. Thus, the following claims are hereby incorporated into the Detailed Description as examples or embodiments, with each claim standing on its own as a separate embodiment.

## Claims

1. An autonomous obstacle monitoring and autonomous vehicle control system (110, 300, 350) comprising:
a remote sensing device (114, 118) including one or more sensors configured to observe obstacles proximate to a determined path of an agricultural system (100) or proximate to the agricultural system (100), wherein the remote sensing device (114, 118) is movable relative to the agricultural system (100);
an obstacle recognition module (310) in communication with the remote sensing device (114, 118), the obstacle recognition module (310) includes:
an obstacle comparator (312) configured to compare obstacles observed with the remote sensing device (114, 118) proximate to the path or the agricultural system (100) with archived characteristics of one or more archived obstacles;
an identification module (314) configured to identify the observed obstacles as identified obstacles based on the comparison; and
an indexing module (316) configured to index one or more of location or vector of the identified obstacles; and
an autonomous agricultural system controller (104) configured for communication with the agricultural system (100), the autonomous agricultural system controller (104) includes:
a path module (302) configured to determine the determined path of travel for the agricultural system (100);
a mission database having one or more missions, each of the one or more missions having a respective mission route of the one or more mission routes;
a mission administration module (304) configured to operate the remote sensing device (114, 118) along one or more mission routes for observation of the obstacles proximate to the one or more mission routes; and
a vehicle operation module (306) configured to control the agricultural system (100) based on the determined path and identified and indexed obstacles.

2. The system of claim 1, wherein the remote sensing device (114, 118) includes a drone (114), the drone preferably including a data transceiver (408); and a global positioning system receiver (410).

3. The system of claim 2 comprising a drone docking station (116), the drone docking station (116) is configured for coupling with the agricultural system (100), and the drone docking station (116) includes a power and data interface (426) configured to couple with the drone (114) in a docked configuration.

4. The system of claim 1, wherein the remote sensing devices (114, 118) includes one or more of a boom or articulating arm (118) movable relative to the agricultural system (100); wherein optionally the one or more sensors are coupled with the boom or articulating arm.

5. The system of claim 1, wherein the one or more sensors include one or more of chemical sensing, optical, video, spectrometric, RGB (red-green-blue), thermographic, hyperspectral, ground penetrating radar, radar, LIDAR or ultrasound sensors.

6. The system of claim 1, wherein the obstacle recognition module (310) includes a prioritizing module (318) configured to prioritize obstacles according to one or more of the identification or indexing; and
wherein optionally the vehicle operation module (306) is configured to control the agricultural system (100) in normal operation, modified operation or halted operation modes based on the prioritizing of the obstacles.

7. The system of claim 1, wherein obstacles include one or more of field obstacles (506) or diagnostic obstacles (802, 804, 806, 808, 810), and
the obstacle recognition module (310) is configured to identify one or more of field obstacles (506) or diagnostic obstacles (802, 804, 806, 808, 810);
wherein, optionally, field obstacles (506) include one or more of debris, field washouts, sink holes, water, saturated ground, humans, livestock, animals, fences, damaged fences, open gates, fallen trees, harvested crop zones, unharvested crops, vehicles or rocks; and/or wherein, optionally, diagnostic obstacles (802, 804, 806, 808, 810) include one or more of a full grain bin, failed component, failing component, damaged component, trapped debris, failed implement, failing implement, damaged implement, fouled spray nozzle, or agricultural product drift.

8. The system of claim 1, wherein the mission database includes one or more of an inspection mission, scout mission or diagnostic mission.; and/or
wherein the mission database includes an inspection mission having an associated inspection route for the remote sensing device (114, 118) proximate to the agricultural system (100); and/or wherein the mission database includes a scout mission having an associated scouting route for the remote sensing device (114, 118) proximate to the determined path; and/or wherein the mission database includes a diagnostic mission having an associated diagnostic route for the remote sensing device (114, 118) proximate to the agricultural system (100).

9. The system of claim 1, wherein the vehicle operation module (306) is configured to control steering, throttle and braking of the agricultural system (100).

10. The system of claim 1 comprising the agricultural system (100).
wherein, preferably, the agricultural system (100) includes one or more of the agricultural system (100), agricultural implement (102) or towed agricultural implement.

11. The system of claim 1, wherein the observed obstacles include one or more sensed characteristics, and the obstacle comparator (312) is configured to compare the sensed characteristics of the observed obstacle with the archived characteristics of the one or more archived obstacles.

12. A method for autonomous obstacle monitoring and autonomous vehicle control (1400) comprising:
conducting (1402) an obstacle monitoring mission with a remote sensing device (114, 118), conducting the obstacle monitoring mission includes:
moving (1404) the remote sensing device (114, 118) relative to an agricultural system (100) along a mission route; and
observing (1406) one or more obstacles with the remote sensing device (114, 118) proximate to the mission route;
recognizing (1408) the one or more obstacles observed with the remote sensing device (114, 118), recognizing includes:
comparing (1410) the one or more obstacles with archived characteristics of archived obstacles;
identifying (1412) the one or more obstacles as identified obstacles based on the comparison; and
indexing (1414) one or more of locations or vectors of the one or more identified obstacles; and
operating (1416) the agricultural system (100) based on the identifying and indexing of the one or more identified obstacles.

13. The method of claim 12 comprising selecting an obstacle monitoring mission from a mission database including a plurality of missions and respective mission routes.

14. The method of claim 13, wherein the plurality of missions and respective mission routes include:
an inspection mission having an inspection route proximate to the agricultural system (100);
a scout mission having a scouting route along a determined path of the agricultural system (100); and
a diagnostic mission having a diagnostic route proximate to the agricultural system (100).

15. The method of claim 12 comprising a path module (302) configured to determine a path of travel for the agricultural system (100) including:
determining a proposed path for the agricultural system (100); and
modifying the proposed path to an updated path based on the identification and indexing of the one or more identified obstacles.

16. The method of claim 12, wherein identifying (1412) the one or more obstacles as identified obstacles includes identifying field obstacles (506) or diagnostic obstacles (802, 804, 806, 808, 810);
wherein, optionally, identifying the one or more obstacles as identified obstacles includes identifying one or more of debris, field washouts, sink holes, water, saturated ground, humans, livestock, animals, fences, damaged fences, open gates, fallen trees, accumulated brush, harvested crop zones, unharvested crops, vehicles or rocks; and/or
wherein, optionally, identifying the one or more obstacles as identified obstacles includes identifying a full grain bin, failed component, failing component, damaged component, trapped debris, failed implement, failing implement, damaged implement, fouled spray nozzle, or agricultural product drift.

17. The method of claim 12, wherein operating the agricultural system (100) based on the identification and indexing of the one or more identified obstacles includes:
prioritizing the one or more identified obstacles based on one or more of the identifying or indexing; and
autonomously controlling the agricultural system (100) based on the prioritizing of the one or more identified obstacles.

18. The method of claim 17, wherein prioritizing includes associating one of a halt operation, modified operation or normal operation indication with the identified obstacles based on one or more of the identifying or indexing; and
autonomously controlling the agricultural system (100) based on the prioritizing includes halting operation for a halt operation indication, modifying operation for a modified operation indication or conducting normal operation with the agricultural system (100) for a normal operation indication.

19. The method of claim 18 comprising repeating recognizing of the one or more obstacles, and repeating operating the agricultural system (100) based on the repeated identifying and indexing of the one or more identified obstacles.

20. The method of claim 19, wherein the remote sensing device (114, 118) includes a drone (114), and conducting the obstacle monitoring mission with the remote sensing device (114, 118) includes:
deploying the drone from a docking station (116) for moving along the mission route and observing the one or more obstacles.

## Patentansprüche

1. Autonomes Hindernisüberwachungs- und autonomes Fahrzeugsteuerungssystem (110, 300, 350), umfassend:
eine Fernerfassungsvorrichtung (114, 118), die einen oder mehrere Sensoren enthält, die eingerichtet sind, Hindernisse in der Nähe eines bestimmten Pfades eines landwirtschaftlichen Systems (100) oder in der Nähe des landwirtschaftlichen Systems (100) beobachten, wobei die Fernerfassungsvorrichtung (114, 118) relativ zu dem landwirtschaftlichen System (100) beweglich ist;
ein Hinderniserkennungsmodul (310), das mit der Fernerfassungsvorrichtung (114, 118) in Verbindung steht, wobei das Hinderniserkennungsmodul (310) umfasst:
einen Hindernisvergleicher (312), der eingerichtet ist, Hindernisse, die mit der Fernerfassungsvorrichtung (114, 118) in der Nähe des Pfades oder des landwirtschaftlichen Systems (100) beobachtet wurden, mit archivierten Eigenschaften eines oder mehrerer archivierter Hindernisse zu vergleichen;
ein Identifikationsmodul (314), das eingerichtet ist, die beobachteten Hindernisse auf der Grundlage des Vergleichs als identifizierte Hindernisse zu identifizieren; und
ein Indizierungsmodul (316), das eingerichtet ist, einen oder mehrere von Standort und Vektor der identifizierten Hindernisse zu indizieren; und
eine autonome landwirtschaftliche Systemsteuerung (104), die für die Kommunikation mit dem landwirtschaftlichen System (100) eingerichtet ist, wobei die autonome landwirtschaftliche Systemsteuerung (104) umfasst:
ein Pfadmodul (302), das eingerichtet ist, den bestimmten Pfad für das landwirtschaftliche System (100) zu bestimmen;
eine Missionsdatenbank mit einer oder mehreren Missionen, wobei jede der einen oder mehreren Missionen eine entsprechende Missionsroute der einen oder mehreren Missionsrouten aufweist;
ein Missionsverwaltungsmodul (304), das eingerichtet ist, die Fernerfassungsvorrichtung (114, 118) entlang einer oder mehrerer Missionsrouten zur Beobachtung der Hindernisse in der Nähe der einen oder mehreren Missionsrouten zu betreiben; und
ein Fahrzeugbetriebsmodul (306), das eingerichtet ist, das landwirtschaftliche System (100) auf der Grundlage des bestimmten Pfades und der identifizierten und indizierten Hindernisse zu steuern.

2. System nach Anspruch 1, wobei die Fernerfassungsvorrichtung (114, 118) eine Drohne (114) umfasst, wobei die Drohne vorzugsweise einen Daten-Sendeempfänger (408) und einen Empfänger (410) für ein globales Positionierungssystem umfasst.

3. System nach Anspruch 2, das eine Drohnen-Andockstation (116) umfasst, wobei die Drohnen-Andockstation (116) zur Kopplung mit dem landwirtschaftlichen System (100) eingerichtet ist und die Drohnen-Andockstation (116) eine Strom- und Datenschnittstelle (426) enthält, die zur Kopplung mit der Drohne (114) in einer angedockten Konfiguration eingerichtet ist.

4. System nach Anspruch 1, wobei die Fernerfassungsvorrichtungen (114, 118) einen oder mehrere von einem Ausleger und einem Gelenkarm (118) umfassen, die relativ zu dem landwirtschaftlichen System (100) beweglich sind; wobei optional der eine oder die mehreren Sensoren mit dem Ausleger oder Gelenkarm gekoppelt sind.

5. System nach Anspruch 1, wobei der eine oder die mehreren Sensoren einen oder mehrere der folgenden Sensoren umfassen: chemische Sensoren, optische Sensoren, Videosensoren, spektrometrische Sensoren, RGB-Sensoren (rot-grün-blau), thermografische Sensoren, Hyperspektralsensoren, Bodenradarsensoren, Radarsensoren, LIDAR-Sensoren oder Ultraschallsensoren.

6. System nach Anspruch 1, wobei das Hinderniserkennungsmodul (310) ein Priorisierungsmodul (318) enthält, das eingerichtet ist, Hindernisse entsprechend der Identifizierung oder Indizierung zu priorisieren; und
wobei optional das Fahrzeugbetriebsmodul (306) eingerichtet ist, das landwirtschaftliche System (100) in den Betriebsarten Normalbetrieb, modifizierter Betrieb oder angehaltener Betrieb basierend auf der Priorisierung der Hindernisse zu steuern.

7. System nach Anspruch 1, wobei die Hindernisse eines oder mehrere von Feldhindernissen (506) oder Diagnosehindernissen (802, 804, 806, 808, 810) umfassen, und
das Hinderniserkennungsmodul (310) eingerichtet ist, eines oder mehrere von Feldhindernissen (506) oder Diagnosehindernissen (802, 804, 806, 808, 810) zu identifizieren;
wobei die Feldhindernisse (506) optional eines oder mehrere der folgenden Elemente umfassen: Schutt, Feldauswaschungen, Senklöcher, Wasser, gesättigter Boden, Menschen, Vieh, Tiere, Zäune, beschädigte Zäune, offene Tore, umgestürzte Bäume, abgeerntete Erntezonen, nicht abgeerntete Ernte, Fahrzeuge oder Felsen; und/oder
wobei die Diagnosehindernisse (802, 804, 806, 808, 810) optional eines oder mehrere der folgenden Merkmale umfassen: voller Kornspeicher, ausgefallenes Bauteil, ausfallendes Bauteil, defektes Bauteil eingeschlossene Trümmer, ausgefallenes Aggregat, defektes Aggregat, beschädigtes Aggregat, verschmutzte Sprühdüse oder Abdrift eines landwirtschaftlichen Produkts.

8. System nach Anspruch 1, wobei die Missionsdatenbank eine oder mehrere umfasst von einer Inspektionsmission, Aufklärungsmission oder Diagnosemission; und/oder
wobei die Missionsdatenbank eine Inspektionsmission mit einer zugehörigen Inspektionsroute für die Fernerfassungsvorrichtung (114, 118) in der Nähe des landwirtschaftlichen Systems (100) enthält; und/oder
wobei die Missionsdatenbank eine Aufklärungsmission mit einer zugehörigen Aufklärungsroute für die Fernerfassungsvorrichtung (114, 118) in der Nähe des bestimmten Pfades enthält; und/oder
wobei die Missionsdatenbank eine Diagnosemission mit einer zugehörigen Diagnoseroute für die Fernerfassungsvorrichtung (114, 118) in der Nähe des landwirtschaftlichen Systems (100) enthält.

9. System nach Anspruch 1, wobei das Fahrzeugbetriebsmodul (306) eingerichtet ist, die Lenkung, die Drosselung und das Bremsen des landwirtschaftlichen Systems (100) zu steuern.

10. System nach Anspruch 1, das landwirtschaftliche System (100) umfassend,
wobei das landwirtschaftliche System (100) vorzugsweise eines oder mehrere umfasst von dem landwirtschaftlichen System (100), dem landwirtschaftliche Aggregat (102) oder gezogenen landwirtschaftlichen Aggregat.

11. System nach Anspruch 1, wobei die beobachteten Hindernisse eine oder mehrere erfasste Eigenschaften umfassen, und der Hindernisvergleicher (312) eingerichtet ist, die erfassten Eigenschaften des beobachteten Hindernisses mit den archivierten Eigenschaften des einen oder der mehreren archivierten Hindernisse zu vergleichen.

12. Verfahren zur autonomen Hindernisüberwachung und autonomen Fahrzeugsteuerung (1400), umfassend:
Durchführen (1402) einer Hindernisüberwachungsmission mit einer Fernerfassungsvorrichtung (114, 118), wobei das Durchführen der Hindernisüberwachungsmission umfasst:
Bewegen (1404) der Fernerfassungsvorrichtung (114, 118) relativ zu einem landwirtschaftlichen System (100) entlang einer Missionsroute; und
Beobachten (1406) eines oder mehrerer Hindernisse mit der Fernerfassungsvorrichtung (114, 118) in der Nähe der Missionsroute;
Erkennen (1408) des einen oder der mehreren Hindernisse, die mit der Fernerfassungsvorrichtung (114, 118) beobachtet wurden, wobei das Erkennen umfasst:
Vergleichen (1410) des einen oder der mehreren Hindernisse mit archivierten Eigenschaften archivierter Hindernisse;
Identifizieren (1412) des einen oder der mehreren Hindernisse als identifizierte Hindernisse basierend auf dem Vergleich; und
Indizieren (1414) eines oder mehrerer Standorte oder Vektoren des einen oder der mehreren identifizierten Hindernisse; und
Betreiben (1416) des landwirtschaftlichen Systems (100) auf der Grundlage des Identifizierens und Indizierens des einen oder der mehreren identifizierten Hindernisse.

13. Verfahren nach Anspruch 12, umfassend das Auswählen einer Hindernisüberwachungsmission aus einer Missionsdatenbank, die eine Vielzahl von Missionen und entsprechende Missionsrouten enthält.

14. Verfahren nach Anspruch 13, wobei die Vielzahl von Missionen und die jeweiligen Missionsrouten umfassen:
eine Inspektionsmission mit einer Inspektionsroute in der Nähe des landwirtschaftlichen Systems (100);
eine Aufklärungsmission mit einer Aufklärungsroute entlang eines bestimmten Pfades des landwirtschaftlichen Systems (100); und
eine Diagnosemission mit einer Diagnoseroute in der Nähe des landwirtschaftlichen Systems (100).

15. Verfahren nach Anspruch 12, das ein Pfadmodul (302) umfasst, das eingerichtet ist, einen Fahrweg für das landwirtschaftliche System (100) zu bestimmen, umfassend:
Bestimmen eines vorgeschlagenen Weges für das landwirtschaftliche System (100); und
Ändern des vorgeschlagenen Weges in einen aktualisierten Weg auf der Grundlage des Identifizierens und Indizierens des einen oder der mehreren identifizierten Hindernisse.

16. Verfahren nach Anspruch 12, wobei das Identifizieren (1412) des einen oder der mehreren Hindernisse als identifizierte Hindernisse das Identifizieren von Feldhindernissen (506) oder Diagnosehindernissen (802, 804, 806, 808, 810) umfasst;
wobei optional das Identifizieren des einen oder der mehreren Hindernisse als identifizierte Hindernisse das Identifizieren von einem oder mehreren der folgenden Elemente einschließt: Schutt, Feldauswaschungen, Senklöcher, Wasser, gesättigter Boden, Menschen, Vieh, Tiere, Zäune, beschädigte Zäune, offene Tore, umgestürzte Bäume, angesammeltes Gestrüpp, abgeerntete Erntezonen, nicht abgeerntete Ernten, Fahrzeuge oder Felsen; und/oder
wobei optional das Identifizieren des einen oder der mehreren Hindernisse als identifizierte Hindernisse das Identifizieren eines vollen Kornbehälters, ausgefallenen Bauteils, defekten Bauteils, beschädigten Bauteils, eingeschlossener Trümmer, ausgefallenen Arbeitsgeräts, defekten Aggregats, ausfallenden Aggregats, beschädigten Aggregats, verschmutzten Sprühdüse oder einer Abdrift eines landwirtschaftlichen Produkts umfasst.

17. Verfahren nach Anspruch 12, wobei das Betreiben des landwirtschaftlichen Systems (100) auf der Grundlage des Identifizierens und Indizierens des einen oder der mehreren identifizierten Hindernisse umfasst:
Priorisieren des einen oder der mehreren identifizierten Hindernisse auf der Grundlage des Identifizierens oder Indizierens; und
autonomes Steuern des landwirtschaftlichen Systems (100) auf der Grundlage des Priorisierens des einen oder der mehreren identifizierten Hindernisse.

18. Verfahren nach Anspruch 17, wobei das Priorisieren das Zuordnen einer Anzeige für einen angehaltenen Betrieb, einen geänderten Betrieb oder einen normalen Betrieb zu den identifizierten Hindernissen auf der Grundlage der Identifizierung oder Indizierung umfasst; und
das autonome Steuern des landwirtschaftlichen Systems (100) auf der Grundlage des Priorisierens das Anhalten des Betriebs bei einer Anzeige des angehaltenen Betriebs, das Ändern des Betriebs bei einer Anzeige des geänderten Betriebs oder das Durchführen des normalen Betriebs mit dem landwirtschaftlichen System (100) bei einer Anzeige des normalen Betriebs umfasst.

19. Verfahren nach Anspruch 18, umfassend das wiederholte Erkennen des einen oder der mehreren Hindernisse und das wiederholte Betreiben des landwirtschaftlichen Systems (100) auf der Grundlage des wiederholten Identifizierens und Indizierens des einen oder der mehreren identifizierten Hindernisse.

20. Verfahren nach Anspruch 19, wobei die Fernerfassungsvorrichtung (114, 118) eine Drohne (114) umfasst, und die Durchführung der Hindernisüberwachungsmission mit der Fernerfassungsvorrichtung (114, 118) umfasst:
Einsetzen der Drohne von einer Andockstation (116) aus, um sich entlang der Missionsroute zu bewegen und das eine oder die mehreren Hindernisse zu beobachten.

## Revendications

1. Système de surveillance d'obstacles autonome et de commande de véhicule autonome (110, 300, 350) comprenant :
un dispositif de détection à distance (114, 118) qui inclut un ou plusieurs capteurs configurés pour observer des obstacles à proximité d'une trajectoire déterminée d'un système agricole (100) ou à proximité du système agricole (100), dans lequel le dispositif de détection à distance (114, 118) peut être déplacé par rapport au système agricole (100) ;
un module de reconnaissance d'obstacles (310) en communication avec le dispositif de détection à distance (114, 118), dans lequel le module de reconnaissance d'obstacles (310) inclut :
un comparateur d'obstacles (312) configuré pour comparer des obstacles qui sont observés à l'aide du dispositif de détection à distance (114, 118) à proximité de la trajectoire du système agricole ou à proximité du système agricole (100) avec des caractéristiques archivées d'un ou de plusieurs obstacles archivés ;
un module d'identification (314) configuré pour identifier les obstacles observés en tant qu'obstacles identifiés sur la base de la comparaison ; et
un module d'indexation (316) configuré pour indexer une ou plusieurs informations parmi une localisation et un vecteur des obstacles identifiés ; et
un contrôleur de système agricole autonome (104) configuré pour communiquer avec le système agricole (100), dans lequel le contrôleur de système agricole autonome (104) inclut :
un module de trajectoire (302) configuré pour déterminer la trajectoire de déplacement déterminée pour le système agricole (100) ;
une base de données de missions comportant une ou plusieurs missions, chacune des une ou plusieurs missions disposant d'un itinéraire de mission respectif des un ou plusieurs itinéraires de mission ;
un module d'administration de mission (304) configuré pour faire fonctionner le dispositif de détection à distance (114, 118) le long d'un ou de plusieurs itinéraires de mission dans le but d'observer les obstacles à proximité des un ou plusieurs itinéraires de mission ; et
un module de fonctionnement de véhicule (306) configuré pour commander le système agricole (100) sur la base de la trajectoire déterminée et des obstacles identifiés et indexés.

2. Système selon la revendication 1, dans lequel le dispositif de détection à distance (114, 118) inclut un drone (114), le drone incluant de préférence un émetteur-récepteur de données (408) ; et un récepteur de système de positionnement mondial (410).

3. Système selon la revendication 2, comprenant une station d'amarrage de drones (116), dans lequel la station d'amarrage de drones (116) est configurée pour être couplée avec le système agricole (100), et la station d'amarrage de drones (116) inclut une interface d'alimentation et de données (426) configurée pour être couplée avec le drone (114) dans une configuration amarrée.

4. Système selon la revendication 1, dans lequel le dispositif de détection à distance (114, 118) inclut un ou plusieurs composants parmi une flèche et un bras articulé (118) qui peut être déplacé(e) par rapport au système agricole (100) ; et dans lequel, en option, les un ou plusieurs capteurs sont couplés avec la flèche ou avec le bras articulé.

5. Système selon la revendication 1, dans lequel les un ou plusieurs capteurs incluent un ou plusieurs capteurs à détection chimique, optiques, par vidéo, spectrométriques, de RGB (rouge-vert-bleu), thermogra-phiques, hyperspectraux, par radar à pénétration de sol/GPR, par radar, à dispositif de détection et d'estimation de la distance par la lumière ou par laser/LIDAR ou à ultrasons.

6. Système selon la revendication 1, dans lequel le module de reconnaissance d'obstacles (310) inclut un module de priorisation (318) configuré pour prioriser les obstacles en fonction d'une ou de plusieurs actions parmi l'identification et l'indexation ; et dans lequel :
en option, le module de fonctionnement de véhicule (306) est configuré pour commander le système agricole (100) dans des modes de fonctionnement normal, de fonctionnement modifié ou de fonctionnement à l'arrêt sur la base de la priorisation des obstacles.

7. Système selon la revendication 1, dans lequel les obstacles incluent un ou plusieurs obstacles parmi des obstacles sur le terrain (506) et des obstacles de diagnostic (802, 804, 806, 808, 810) ; et
le module de reconnaissance d'obstacles (310) est configuré pour identifier un ou plusieurs obstacles parmi les obstacles sur le terrain (506) et les obstacles de diagnostic (802, 804, 806, 808, 810) ; dans lequel :
en option, les obstacles sur le terrain (506) incluent un ou plusieurs obstacles parmi des débris, des affaissements ou des ravinements de terrain, des trous d'eau, de l'eau, un sol saturé, des êtres humains, du bétail, des animaux, des clôtures, des clôtures endommagées, des barrières ouvertes, des arbres tombés ou abattus, des zones de cultures récoltées ou moissonnées, des cultures non récoltées ou non moissonnées, des véhicules et des pierres ou des roches ; et/ou dans lequel :
en option, les obstacles de diagnostic (802, 804, 806, 808, 810) incluent un ou plusieurs obstacles parmi un silo à grains plein, un composant défectueux, un composant en panne, un composant endommagé, des débris coincés ou piégés, un outil ou un équipement défectueux, un outil ou un équipement en panne, un outil ou un équipement endommagé, une buse de pulvérisation obstruée et une accumulation de produits agricoles.

8. Système selon la revendication 1, dans lequel la base de données de missions inclut une ou plusieurs missions parmi une mission d'inspection, une mission de reconnaissance et une mission de diagnostic ; et/ou dans lequel :
la base de données de missions inclut une mission d'inspection qui dispose d'un itinéraire d'inspection associé pour le dispositif de détection à distance (114, 118) à proximité du système agricole (100) ; et/ou dans lequel :
la base de données de missions inclut une mission de reconnaissance qui dispose d'un itinéraire de reconnaissance associé pour le dispositif de détection à distance (114, 118) à proximité de la trajectoire déterminée ; et/ou dans lequel :
la base de données de missions inclut une mission de diagnostic qui dispose d'un itinéraire de diagnostic associé pour le dispositif de détection à distance (114, 118) à proximité du système agricole (100).

9. Système selon la revendication 1, dans lequel le module de fonctionnement de véhicule (306) est configuré pour commander la direction, l'accélération et le freinage du système agricole (100).

10. Système selon la revendication 1, comprenant le système agricole (100), dans lequel,
de préférence, le système agricole (100) inclut un ou plusieurs moyens parmi le système agricole (100), un outil ou un équipement agricole (102) et un outil ou un équipement agricole tracté.

11. Système selon la revendication 1, dans lequel les obstacles observés incluent une ou plusieurs caractéristiques détectées, et le comparateur d'obstacles (312) est configuré pour comparer les caractéristiques détectées de l'obstacle observé avec les caractéristiques archivées des un ou plusieurs obstacles archivés.

12. Procédé pour la surveillance d'obstacles autonome et la commande de véhicule autonome (1400) comprenant :
la mise en œuvre (1402) d'une mission de surveillance d'obstacles à l'aide d'un dispositif de détection à distance (114, 118), dans lequel la mise en œuvre de la mission de surveillance d'obstacles inclut :
le déplacement (1404) du dispositif de détection à distance (114, 118) par rapport à un système agricole (100) le long d'un itinéraire de mission ; et
l'observation (1406) d'un ou de plusieurs obstacles à l'aide du dispositif de détection à distance (114, 118) à proximité de l'itinéraire de mission ;
la reconnaissance (1408) des un ou plusieurs obstacles qui sont observés à l'aide du dispositif de détection à distance (114, 118), dans lequel la reconnaissance inclut :
la comparaison (1410) des un ou plusieurs obstacles avec des caractéristiques archivées d'obstacles archivés ;
l'identification (1412) des un ou plusieurs obstacles en tant qu'obstacles identifiés sur la base de la comparaison ; et
l'indexation (1414) d'une ou de plusieurs informations parmi des localisations et des vecteurs des un ou plusieurs obstacles identifiés ; et
le fonctionnement (1416) du système agricole (100) sur la base de l'identification et de l'indexation des un ou plusieurs obstacles identifiés.

13. Procédé selon la revendication 12, comprenant la sélection d'une mission de surveillance d'obstacles à partir d'une base de données de missions qui inclut une pluralité de missions et d'itinéraires de mission respectifs.

14. Procédé selon la revendication 13, dans lequel la pluralité de missions et d'itinéraires de mission respectifs inclut :
une mission d'inspection qui dispose d'un itinéraire d'inspection à proximité du système agricole (100) ;
une mission de reconnaissance qui dispose d'un itinéraire de reconnaissance le long d'une trajectoire déterminée du système agricole (100) ; et
une mission de diagnostic qui dispose d'un itinéraire de diagnostic à proximité du système agricole (100).

15. Procédé selon la revendication 12, comprenant un module de trajectoire (302) configuré pour déterminer une trajectoire de déplacement pour le système agricole (100), incluant :
la détermination d'une trajectoire proposée pour le système agricole (100) ; et
la modification de la trajectoire proposée selon une trajectoire mise à jour sur la base de l'identification et de l'indexation des un ou plusieurs obstacles identifiés.

16. Procédé selon la revendication 12, dans lequel l'identification (1412) des un ou plusieurs obstacles en tant qu'obstacles identifiés inclut l'identification d'obstacles sur le terrain (506) ou d'obstacles de diagnostic (802, 804, 806, 808, 810) ; dans lequel :
en option, l'identification des un ou plusieurs obstacles en tant qu'obstacles identifiés inclut l'identification d'un ou de plusieurs obstacles parmi des débris, des affaissements ou des ravinements sur le terrain, des trous d'eau, de l'eau, un sol saturé, des êtres humains, du bétail, des animaux, des clôtures, des clôtures endommagées, des barrières ouvertes, des arbres tombés ou abattus, des broussailles amoncelées, des zones de cultures récoltées ou moissonnées, des cultures non récoltées ou non moissonnées, des véhicules et des pierres ou des roches ; et/ou dans lequel :
en option, l'identification des un ou plusieurs obstacles en tant qu'obstacles identifiés inclut l'identification d'un ou de plusieurs obstacles parmi un silo à grains plein, un composant défectueux, un composant en panne, un composant endommagé, des débris coincés ou piégés, un outil ou un équipement défectueux, un outil ou un équipement en panne, un outil ou un équipement endommagé, une buse de pulvérisation obstruée et une accumulation de produits agricoles.

17. Procédé selon la revendication 12, dans lequel le fonctionnement du système agricole (100) sur la base de l'identification et de l'indexation des un ou plusieurs obstacles identifiés inclut :
la priorisation des un ou plusieurs obstacles identifiés sur la base d'une ou de plusieurs actions parmi l'identification et l'indexation ; et
la commande autonome du système agricole (100) sur la base de la priorisation des un ou plusieurs obstacles identifiés.

18. Procédé selon la revendication 17, dans lequel la priorisation inclut l'association d'une indication parmi une indication de fonctionnement à l'arrêt, une indication de fonctionnement modifié et une indication de fonctionnement normal avec les obstacles identifiés sur la base d'une ou de plusieurs actions parmi l'identification et l'indexation ; et dans lequel :
la commande autonome du système agricole (100) sur la base de la priorisation inclut l'arrêt du fonctionnement pour une indication de fonctionnement à l'arrêt, la modification du fonctionnement pour une indication de fonctionnement modifié ou la mise en œuvre d'un fonctionnement normal avec le système agricole (100) pour une indication de fonctionnement normal.

19. Procédé selon la revendication 18, comprenant la répétition de la reconnaissance des un ou plusieurs obstacles et la répétition du fonctionnement du système agricole (100) sur la base de l'identification et de l'indexation répétées des un ou plusieurs obstacles identifiés.

20. Procédé selon la revendication 19, dans lequel le dispositif de détection à distance (114, 118) inclut un drone (114), et la mise en œuvre de la mission de surveillance d'obstacles à l'aide du dispositif de détection à distance (114, 118) inclut :
le déploiement du drone à partir d'une station d'amarrage (116) pour son déplacement le long de l'itinéraire de mission et pour l'observation des un ou plusieurs obstacles.
